(19)

**Europäisches Patentamt**
**European Patent Office**
**Office européen des brevets**

(11) **EP 4 450 246 A1**

(12) **EUROPEAN PATENT APPLICATION**

(43) Date of publication:
**23.10.2024 Bulletin 2024/43**

(21) Application number: **23168303.8**

(22) Date of filing: **17.04.2023**

(51) International Patent Classification (IPC):
**B29B 17/02** $^{(2006.01)}$  **C08J 11/08** $^{(2006.01)}$
**B29B 17/04** $^{(2006.01)}$  **B29K 27/00** $^{(2006.01)}$
**B29K 27/06** $^{(2006.01)}$  **B29K 105/00** $^{(2006.01)}$

(52) Cooperative Patent Classification (CPC):
**B29B 17/02; C08J 11/08;** B29B 17/0412;
B29B 2017/0293; B29K 2027/00; B29K 2027/06;
B29K 2105/0005; C08J 2327/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Vynova Holding S.A.**
**1313 Luxembourg (LU)**

(72) Inventor: **The designation of the inventor has not yet been filed**

(74) Representative: **Herzog IP Patentanwalts GmbH**
**Steinstraße 16-18**
**40212 Düsseldorf (DE)**

(54) **SEPARATION OF PVC FROM SOLIDS DURING PVC RECOVERY FROM WASTE**

(57) Process of making a vinyl halide polymer comprising at least these steps: providing a plastic composition comprising at least 10 wt.% of the vinyl halide polymer and one or more additives; providing a first liquid organic phase comprising an organic solvent; contacting at least a part of the plastic composition and a part of the first liquid organic phase, by which at least a part of the plastic composition swells in its volume and forms a swollen material; providing a first aqueous phase having a density in the range from 0.9 and 2.0; contacting the swollen material and the first aqueous phase wherein a suspension is obtained; removing water from the suspension to recover the swollen material. The disclosure further relates to providing a second liquid organic phase comprising at least a second organic solvent to the swollen material; contacting the second liquid organic phase with the swollen material thereby forming a base composition, and dividing this into a first composition and a second composition; wherein the first composition has a higher content of additives than the second composition; and the second composition has a higher content of the vinyl halide polymer than the first composition.

EP 4 450 246 A1

## Description

The invention relates to a process of making a vinyl halide polymer comprising at least these steps: Providing a plastic composition comprising at least 10 wt.% of the vinyl halide polymer and one or more additives; providing a first liquid organic phase comprising an organic solvent; contacting at least a part of the plastic composition and a part of the first liquid organic phase, by which at least a part of the plastic composition swells thereby forming a swollen material; providing a first aqueous phase having a density in the range from 0.9 and 2.0 comprising water and optionally salt which is dissolved in the water; contacting the swollen material and the first aqueous phase wherein a suspension is obtained; removing solids if present and water from the suspension to recover the swollen material. The invention further relates to providing a second liquid organic phase comprising at least a second organic solvent to the swollen material; contacting the second liquid organic phase with the swollen material thereby forming a base composition, which is then divided into a first composition and a second composition; wherein the first composition has a higher content of additives than the second composition; and the second composition has a higher content of the vinyl halide polymer than the first composition.

The invention further relates to a vinyl halide polymer obtainable by the above process, an article comprising the vinyl halide polymer and uses of the vinyl halide polymer and of swelling of vinyl halide polymer to enhance the purity of the vinyl halide polymer.

## Background of the invention

Vinyl halide polymers such as poly vinyl chloride (PVC) are widely used for the manufacture of a variety of articles. They are used, for example, for the manufacture of sheets - generally reinforced with reinforcing fibers - intended for covering soils, for covering vehicles (trucks), for the concealing of buildings on which work is being carried out, for the construction of sets for entertainments or exhibitions, or for advertising purposes. Furthermore, in many applications, their lifetime is short, typically a few weeks or months. For these reasons, large quantities of PVC are scrapped each year. The process of recycling them consequently constitutes a major ecological and economic problem.

The same situation applies with regard to other articles based on one or more, flexible or rigid, vinyl halide polymers (preferably PVC) for example with regard to conveyor belts, coated fabrics and other elements for the interior furnishing of vehicles, pipes and hoses, window frames or polymer-insulated power cables.

Thorough grinding of these articles usually results in a mixture of fine particles of heterogeneous composition, which is difficult to purify and reuse. Furthermore, in the case of fiber-reinforced articles (for example, polyester or nylon-fiber-reinforced articles), the fibers often form a kind of wadding which makes it much more complicated to reuse the ground particles.

Various processes based on dissolving, using organic solvents, have already been proposed; however, they often cause safety and pollution problems.

Solvay aimed at solving that problem and developed the so-called Vinyloop process. This process is simple, economic and reliable, and does not produce much pollution. Further, it allows plastics of high purity and advantageous morphology to be recovered, while substantially preventing any additives from being extracted therefrom. This process includes the dissolution of the polymer in an adequate solvent capable of dissolving it and susceptible of forming an azeotrope with water, and its precipitation by injecting steam in the solution thus obtained, which moreover leads to the stripping of the water-solvent azeotrope and so leaves behind a mixture essentially consisting of water and of solid polymer particles which are recovered, while the vapors resulting from the stripping are condensed and decanted so as to recover both a solvent phase for a subsequent dissolution and a "water" phase for a subsequent precipitation. This process to recycled PVC had a primary energy demand which is 46 % lower and the use of water about 76 % less than for conventional produced PVC. However, the process had no way to remove low molecular weight additives such as phthalates during recycling, and tightened EU regulations led to a halt of industrial usage of this process.

There are other process developments which aim to increase efficiency of the recycling of PVC and to remove additives in a cost-effective way. However, all these processes still have their disadvantages.

## Objectives

The present invention has its roots in Solvay's Vinyloop process. By various improvements the process of the present invention tops its historical basis by decades.

It is an object of the present invention to overcome, at least in part, one or more of the disadvantages resulting from the prior art.

Another object of the invention is to recycle waste PVC for a second lifecycle.

Another object of the invention is to provide a method to treat waste PVC in order to make it a raw material for a second lifecycle.

It is an object of the invention to provide a method to treat waste PVC in order to make it a raw material for a second lifecycle thereby preserving the properties from the previous application.

It is an object of the invention to provide a method to treat waste PVC in order to make it a raw material for a second lifecycle as a high-quality product.

It is an object of the invention to provide a method to treat waste PVC in order to make it a raw material for the same use as before.

It is an object of the invention to use waste PVC from construction and to prepare a raw material for the manufacture of articles used in construction.

It is an object of the invention to provide a method to recycle PVC with less energy consumption than known recycling processes.

It is an object of the invention to provide a method to recycle PVC at room temperature or slightly elevated temperature.

It is an object of the invention to provide a method to separate PVC from other materials, such as other plastics, highly filled plastics, crosslinked plastics and non-plastic materials at room temperature or slightly elevated temperature.

It is an object of the invention to provide a method to separate waste PVC into unplasticized PVC and plasticized PVC.

It is an object of the invention to provide a method to separate waste PVC from highly filled plastics at room temperature or slightly elevated temperature.

It is an object of the invention to provide a method to recycle PVC to a raw material for a second lifecycle without heating.

It is an object of the invention to provide a method to separate unplasticized PVC from other materials, such as other plastics, highly filled plastics, crosslinked plastics and non-plastic materials, such as glass, metals, mud without heating.

It is an object of the invention to separate waste PVC parts from other parts of a density of up to 1.4 g/cm$^3$ in an effective manner.

It is another object of the invention to separate waste PVC parts from other parts of a density of up to 1.4 g/cm$^3$ in an effective manner without removing any additives to the PVC.

It is another object of the invention to separate waste PVC parts from other parts of a density of up to 1.4 g/cm$^3$ in an effective manner and to remove additives from the PVC.

Another object of the invention is to recover or recycle unplasticized PVC from waste PVC comprising plasticized PVC.

It is another object of the invention to prepare recycled PVC in high purity.

It is another object of the invention to prepare recycled PVC in high purity but preserving additives present in the PVC.

It is another object of the invention to prepare recycled PVC free of components items with a density of > 1.0 g/cm$^3$.

It is another object of the invention to prepare recycled PVC in high purity free of components with a density of >1.0 g/cm$^3$ and free of any additives to the PVC.

It is an object of the invention to provide a method to recycle PVC using eco-friendly solvents.

It is an object of the invention to provide a method to recycle PVC using solvents from renewable resources.

It is an object of the invention to provide a method to recycle PVC using biodegradable solvents.

It is an object of the invention to use waste PVC from construction and to prepare a raw material for the manufacture of articles used in construction without depletion of the additives from the waste PVC.

It is an object of the invention to use waste PVC from construction and to prepare a raw material for the manufacture of articles used in construction thereby preserving the additives from the waste PVC.

Another object of the invention is to avoid the generation of hazardous waste when recycling PVC from waste PVC for a second lifecycle.

Another object of the invention is to avoid the generation of hazardous waste, such as organic and inorganic lead compounds, and/or phthalates, when recycling PVC from waste PVC for a second lifecycle.

An object of the invention is to employ less organic volatile organic compounds, such as solvents, than in known processes of PVC recycling.

An object of the invention is to reduce a risk of environmental damages than in known processes of PVC recycling.

An object of the invention is to use biodegradable organic solvents in the process of recycling PVC.

An object of the invention is to provide a process of recycling waste PVC for a second lifecycle in construction materials, whereby no addition of pigments is necessary.

Another object is to provide articles of recycled PVC which have the same or at least comparable properties compared with the same article made from virgin PVC.

Another object of the invention is to provide a method of the manufacture of articles from recycled PVC, where an addition of additives can be avoided.

Another object of the invention is to provide a method of the manufacture of articles from recycled PVC, where additives from the first use can be further used.

Another object is to provide articles of recycled PVC which have the same or at least comparable properties compared with the same article made from virgin rigid PVC.

Another object is to recycle waste PVC for a second lifecycle whereby legacy additives, such as lead compounds and/or phthalates are removed from the PVC in order to obtain a recycled PVC free of these additives.

**General**

In the description, range specifications also include the values mentioned as limits. A specification of the type "in the range from X to Y" with respect to a quantity A consequently means that A can assume the values X, Y and values between X and Y. One-sided limited ranges of the kind "up to Y" for a size A mean accordingly as values Y and smaller than Y.

All numeric values and ranges mentioned in this description are meant to be "about" the value or range. The term "about" means that the value or range needs not to be met with absolute accuracy. "About" means that the numerical value or range can be hit exactly, but further includes a range of about +/- 2 %, based on the referenced value or endpoints of ranges. "About" also includes the exact values as a preferred embodiment. For example, a range mentioned to be from 20 to 80 could have its one end between 19.96 and 20.04, with the exact value of 20.00 being preferred Similarly on the other end, it can mean any value between 78.4 and 81.6, with the exact value of 80.0 being preferred. Accordingly, this range could go from 19.96 to 81.6, or from 19.96 to 78.4, and so forth.

**Definitions**

1 Dalton (1 Da) is a unit of mass equal to 1 g/mol, and a 1 kDa equals to 1 kg/mol and 1'000 g/mol. 1 MDa is 1'000'000 Da or 1'000'000 g/mol.

1 Å, or 1 Angstrom is a unit of length equal to 0.1 nm, or $10^{-10}$ m.

The molecular weight cut-off (MWCO) of a membrane gives the molecular weight of a dissolved polymer, at which 90 % of the amount of the dissolved polymer is retained by the membrane. For commercial membranes, the MWCO is determined by testing polystyrene dissolved in THF when referring to organic solvents, or Dextran dissolved in water for the aqueous systems.

For example, a sample of a polystyrene with a broad and homogeneous molecular weight distribution is dissolved in THF giving a sample solution. The sample solution is subjected to a membrane filtration. Both, the sample solution and the permeate which has passed the membrane are characterized using GPC (gel permeation chromatography) with a refractive index detector. This GPC was calibrated with narrow-PDI polystyrene standard model polymers running THF as solvent. The MWCO is determined by identifying the point at which 90% of the dissolved polymer has passed the membrane. Usually, the MWCO is given by the supplier as part of the technical properties of commercial membranes.

The term "has less lead" refers to the presence of lead in elemental form, as an ion, complexed and in any other form. Usually, it is present as an ion of a lead salt or lead containing additive.

Terms like "up" and "low", "top" and "bottom", "upper" and "lower" indicate relative position with regard to an item or within an item or volume. The meaning of these terms always characterized the relative position based on the gravity vector, i.e. items located "up", "upper" and "top" are located or move relatively in direction in the opposite of to the gravity vector, while items located "bottom", "lower" or "down" are located or move relatively in direction of the gravity vector.

Room temperature is defined as 20 °C. Densities of solvents and other temperature dependent parameters are given for 20 °C, if not mentioned otherwise.

Summary **of** the invention

An aim of the invention is to provide a way of separating and recycling of unplasticized PVC, also called rigid PVC, found in a stream of waste from deconstruction of buildings and the like, which is eco-friendly and energy-efficient. Such a waste stream comprises relevant amounts of PVC, but also soft PVC, other polymers, mineral and metal waste, paper, carton and wood. It is also desired to separate the unplasticized PVC from plasticized, also called soft PVC. Moreover, it would be appreciated to conduct this process at room temperature, or slightly above at a moderate temperature. Contamination of recycled PVC (also referred-to as: rPVC) with soft PVC and/or plasticizer would likely prevent the rPVC from a second use as rigid PVC in construction of buildings, like window frames, doors, pipes, shutters etc. A challenge to separation different PVC qualities is their somewhat close-by densities, and similarity in other physical properties. Pure PVC has a density of 1.38 g/cm$^3$. Soft, plasticized PVC seals has usually a density of about 1.2 to 1.3

g/cm$^3$ depending on the type and amount of plasticizer and filler. On the other hand, rigid PVC has a higher density since it often comprises fillers and or pigments. So, its density is usually more than 1.4, such as 1.4 - 1.5 g/cm$^3$. Another challenge is to separate rigid PVC from other, high density materials in the waste stream, for example glass, metal, crosslinked polymers etc.

**Embodiments of the invention**

A contribution to the at least partial achievement of at least one of the aforementioned objectives and the aim is made by any of the aspects and embodiments of the invention.

|1| A process of making a vinyl halide polymer comprising at least these steps:

i) Providing a plastic composition, wherein the plastic composition comprises at least 10 wt.% of the vinyl halide polymer and one or more additives;
ii) Providing a first liquid organic phase;
Wherein the first liquid organic phase comprises at least an organic solvent;
iii) Contacting at least a part of the plastic composition and a part of the first liquid organic phase;
iv) Swelling at least a part of the plastic composition wherein a swollen material is formed;
v) Providing a first aqueous phase comprising water and optionally at least one salt, wherein the salt is dissolved in the water at least partially,
wherein the first aqueous phase has a density in the range from 0.9 and 2.0;
vi) Contacting the swollen material and the first aqueous phase wherein a suspension is obtained;
vii) Removing at least some water from the suspension to recover the swollen material.

|2| The process of embodiment |1|, further comprising step
viii) removing at least a part of the first liquid organic phase from the recovered swollen material.

|3| The process of embodiment |1| or embodiment |2|, wherein the swollen material formed in step iv) is swollen in its volume by a swell rate of at least 1.2

|4| The process of any one of the preceding embodiments, further comprising these steps:

ix) providing a second liquid organic phase, wherein the second liquid organic phase comprises at least one organic solvent;
x) contacting the second liquid organic phase with the swollen material wherein a base composition is formed;
xi) Dividing the base composition into a first composition and a second composition; wherein the first composition has a higher content of additives than the second composition; and wherein the second composition has a higher content of the vinyl halide polymer than the first composition.

|5| The process of any one of the preceding embodiments, wherein at least one of the solvents in the first liquid organic phase has a dipole moment of 1.6 or more.

|6| The process of embodiment |4| or |5|, wherein at least one of the solvents in the second liquid organic phase has a dipole moment of 1.6 or more.

|7| The process of any of the preceding claims, wherein at least one of the steps i) - vii) is performed at a temperature in the range from 10 to 150 °C.

|8| The process of any of the preceding claims, wherein at least one of the steps ix) - xi) is performed at a temperature in the range from 10 to 150 °C.

|9| The process of embodiment 111, wherein the providing of plastic composition of step i) comprises grinding the plastic composition into particles, wherein at least 75 % of the PVC particles have a size of 5 cm or less, based on the total number of the particles.

|10| The process of embodiment |9|, wherein the grinding is made by at least one of the techniques selected from universal milling, roller milling, cut milling, single shaft shredder, pulverizer and crusher machine.

|11| The process of any one of the preceding embodiments, wherein at least one organic solvent of the first liquid organic phase has a dipole moment of more than 1.6.

|12| The process of any one of the preceding embodiments, wherein step i) comprises a pre-treatment comprising at least these steps:

a) Providing a feed composition comprising a plastic composition wherein the plastic composition comprises at least 10 wt.% of the vinyl halide polymer and one or more additives;
b) Providing a second aqueous phase comprising water and at least one salt;

wherein the salt is dissolved in the water at least partially;
wherein the second aqueous phase has a density in the range from 0.9 and 1.4;

c) Contacting the second aqueous phase with the feed composition to form a slurry;
d) Separating a sediment formed in the slurry from the slurry and possibly floating particles, wherein the sediment comprises at least a part of the plastic composition;
e) Removing water from the plastic composition.

|13| The process of any one of the preceding embodiments, wherein the organic solvent of the first liquid organic phase is selected from the group consisting of ketones, ethers, aromatics, DMA, DMF, DES and NADES.

|14| The process of any one of the preceding embodiments, wherein the organic solvent of the second liquid organic phase is selected from the group consisting of ketones, ethers, aromatics, halogenated solvents, DMA, DMF, DMSO, DES and NADES.

|15| The process of any one of the preceding embodiments, wherein the swelling in step iv) is characterized by at least one of these features:

(a) a temperature of both, the plastic composition and the first liquid organic phase, in the range from 10°C to 150°C;
(b) a swell time in the range from 0.2 hours to 6 hours.
(c) a density of the swollen plastic composition in the range from 1.0 to 1.4 g/cm$^3$;
(d) a swell rate of the plastic composition of at least 1.2;
or a combination of any two or more of the above.

|16| The process of any one of the preceding embodiments, wherein the removing of at least some water in step vii) is made using at least one of these techniques centrifugation, decantation, rotating decanter, flotation, cycloning, addition of salt or concentrated aqueous salt solution.

|17| The process of any one of embodiments |2| to |16|, wherein at least one of these features applies for the at least partial removal of at least one organic solvent in step viii):

(A) The organic solvent is removed at a temperature in the range from 10 to 90 °C and at 1 bar;
(B) The organic solvent is removed at a pressure in the range from 0.05 bar to 1 bar and a temperature of 10 to 150 °C;
(C) Removing is performed by using a rotary kiln, fluid bed or flash drier;
(D) The content of organic solvents in the recovered material after completion of step viii) is less than 1.0 wt.%, based on the total weight of the recovered material;
Or a combination of any two or more of the above.

|18| The process of any one of embodiments |4| to |17|, wherein at least one of these features apply during dividing in step xi):

a)) the first composition has a density of less than 1.0 g/cm$^3$.
b)) The second composition has a density of 1.0 g/cm$^3$ or more;
c)) wherein the step xi) has a throughput of at least 0.5 L/m$^2$/h/bar;
d)) the temperature of the base composition during the dividing is in the range from 10 °C to 150 °C;
e)) the pressure of the base composition during the dividing is in the range from 1 to 20 bar;

Or a combination of any two or more of the above.

|19| The process of any one of embodiments |4| to 1181, wherein the dividing in step xi) is performed using a technique selected from one of these: filtration, membrane filtration, deep filtration, centrifugation, decantation, rotating decanter, flotation, cycloning.

|20| The process of any one of embodiments |4| to |19|, further comprising this step:
xii) Splitting the second composition into a solid phase comprising the vinyl halide polymer and a recovered organic phase.

|21| The process of embodiment |20|, wherein the splitting is performed using at least one technique selected from the group consisting of precipitation, distillation, centrifugation, freeze drying, removal of organic phase in vacuo, flash drying, fluid bed drying, and stripping.

|22| The process of any one of the preceding embodiments, wherein the first composition is split into a recovered organic phase and a further phase wherein the further phase comprises more additives than the recovered organic phase.

|23| The process of any one of embodiments from |1| to |22|, wherein the recovered organic phase is treated by a treatment, wherein a liquid organic phase is obtained, which can be reused in the providing step ii) of the process.

|24| The process of any one of the preceding embodiments, wherein the liquid organic phase in step ii) comprises an amount of at least 90 wt.% of recovered organic phase.

|25| The process of any one of the preceding embodiments, wherein the vinyl halide polymer is obtained in solid state.

|26| The process of any one of the preceding embodiments, wherein the vinyl halide polymer comprises less than 1 wt.% of organic solvent.

|27| The process of any one of the preceding embodiments, wherein the vinyl halide polymer comprises less than 1'000 ppm of additives, with respect to each additive.

|28| The process of any one of the preceding embodiments, wherein the additives are selected from inorganic and organic compounds.

|29| The process of any one of the preceding embodiments, wherein the organic phase in step ii) comprises less than 40 wt.% of water, based on the total amount of organic phase.

|30| The process of any one of the preceding embodiments, wherein vinyl halide polymer has at least 10 - times less additives, per additive substance, than the plastic composition.

|31| The process of any one of the preceding embodiments, wherein vinyl halide polymer has at least 10 - times less lead than the plastic composition.

|32| The process of any one of the preceding embodiments, wherein vinyl halide polymer has at least 10 times less DEHP than the plastic composition.

|33| A vinyl halide polymer obtainable by a process according to any of the preceding embodiments.

|34| An article comprising a vinyl halide polymer as in embodiment |33|, or obtainable by the process according to any one of embodiments |1| to |32|.

|35| The article according to embodiment |34|, wherein the article is selected from the group consisting of fiber, a filament, a textile, a film and a formed body, such as pipe, tube or profile, door or shutter, or an object of more complex geometrical shape.

|36| A method of manufacture of an article as described in embodiment |35|, comprising at least these steps:

I) Providing a feed comprising at least 5 wt.% of the vinyl halide polymer;
II) Melting the vinyl halide polymer and obtaining a preform;
III) Manipulating the preform to obtain the article.

|37| An article obtainable by the embodiment of |36|.

|38| A use of vinyl halide polymer in an article, wherein the vinyl halide polymer is obtained by the process according to any one of embodiments |1| to |32|, or according to any one of embodiments 13 31 to |37|.

|39| A use of swelling of a vinyl halide polymer in at least one organic solvent for specific gravity separation of the swollen vinyl halide polymer from matter having a density of up to and including to 2.0 g/cm$^3$.

|40| A use of swelling of a vinyl halide polymer in at least one organic solvent to improve the purity of the vinyl halide polymer.

**Detailed Description of the invention**

A first aspect of the invention is a process of making a vinyl halide polymer comprising at least these steps:

i) Providing a plastic composition, wherein the plastic composition comprises at least 10 wt.% of the vinyl halide polymer and one or more additives;
ii) Providing a first liquid organic phase;
Wherein the first liquid organic phase comprises an organic solvent;
iii) Contacting at least a part of the plastic composition and a part of the first liquid organic phase;
iv) Swelling at least a part of the plastic composition,
wherein a swollen material is formed;
v) Providing a first aqueous phase comprising water and optionally at least one salt, wherein the salt is dissolved in the water at least partially,
wherein the first aqueous phase has a density in the range from 0.9 and 2.0 g/cm$^3$;
vi) Contacting the swollen material and the first aqueous phase wherein a suspension is obtained;
vii) Removing at least some water from the suspension to recover the swollen material.

The plastic composition can be of any kind known to a skilled person and considered potentially useful for providing in the present process. The plastic composition is often composed of materials and items which were disposed as waste before. So, the present process could be seen as a recycling of vinyl halide polymers and items comprising one or more vinyl halide polymers. The plastic composition is usually composed of solid components. Prior use of these items can be packaging of food, beverages, non-food, liquids, solids and all kinds of other tradable goods. Also, these items can be packaging of construction materials and even construction materials itself, like windows and doors with plastic frames, pipe, flooring, rigid films, profile, sidings, ceilings, medical and food film, medical articles, tubes, doors, shutters, bottles, fittings, shoe soles, cables, and so on.
More specifically, the plastic composition comprises at least 10 wt.% of one or more vinyl halide polymers, i.e. of one, or a combination of two or more vinyl halide polymers. Accordingly, when the term "vinyl halide polymer" used throughout this description refers to a single vinyl halide polymer, as well as to a combination of two or more vinyl halide polymers. This simplification is made to enhance the legibility of the present text. If the plastic composition comprises more than a single vinyl halide polymer, the wt.% describe the total amount of all vinyl halide polymers.
For example, the plastic composition comprises vinyl halide polymer at least 15, 20, 25, 30, 35, 40, 45, 50, 55, 60, 65, 70, 75, 80, 85 or 90 wt. %, the wt.% with respect to the total plastic composition. For example, the plastic composition may comprises vinyl halide polymer in a range from 15 to 99, 20 to 99, 25 to 99, 30 to 99, 35 to 99, 40 to 99, 45 to 99, 50 to 99, 55 to 99, 60 to 99, 65 to 99, 70 to 99, 75 to 99, 80 to 99, 85 to 99, or 90 to 99, or in a range from 15 to 95, 20 to 95, 25 to 95, 30 to 95, 35 to 95, 40 to 95, 45 to 95, 50 to 95, 55 to 95, 60 to 95, 65 to 95, 70 to 95, 75 to 95, 80 to 95, 85 to 95, or 90 to 95, or in a range from 15 to 90, 20 to 90, 25 to 90, 30 to 90, 35 to 90, 40 to 90, 45 to 90, 50 to 90, 55 to 90, 60 to 90, 65 to 90, 70 to 90, 75 to 90, 80 to 90 or 85 to 90, the values and ranges all given as wt.%, the wt.% with respect to the total plastic composition. Often typical plastic compositions comprise from 20 to 90 wt.% vinyl halide polymer. The remainder in the plastic composition to 100 wt.% is composed of further constituents.
The vinyl halide polymer can be of any kind known to and considered suited to be employed in the present invention. The vinyl halide polymers include the homopolymers and copolymers of vinyl halides including, for example, vinyl chloride and vinyl bromide. The term vinyl halide polymers comprise also copolymers of different vinyl halides with each other or copolymers of a vinyl halide with one or more polymerizable olefinic monomers having at least one terminal

CH$_2$=C< group.

As examples of such olefinic monomers, there may be mentioned the alpha, beta-olefinically unsaturated carboxylic acids such as acrylic acid, methacrylic acid, methacrylic acid, alpha-cyanoacrylic acid, etc.; esters of acrylic acid such as methylacrylate, ethylacrylate, butylacrylate, octylacrylate, cyanoethylacrylate, etc.; esters of methacrylic acid such as methylmethacrylate, butylmethacrylate, etc.; nitrile such as acrylonitrile, methacrylonitrile, etc.; acrylamides such as methylacryl-amide, N-methylol acrylamide, N-butoxy methylacrylamide, etc.; vinyl ethers such as ethyl vinyl ether, chloroethyl vinyl ether, etc.; the vinyl ketones; styrene and styrene derivatives such as methyl styrene, vinyl toluene, chlorostyrene, etc.; vinyl naphthalene; esters such as allyl or vinyl chloroacetate, vinyl acetate, etc.; vinyl pyridene; methyl vinyl ketone; the diolefins, including butadiene, isoprene, chloroprene, etc.; and other polymerizable olefinic monomers of the types known to those skilled in the art.

Accordingly, there may be mentioned as well-suited vinyl halide polymers polyvinylchloride (PVC), PVC-copolymers such as PVC-co-vinyl acetate polymer, chlorinated PVC, polyvinylidene-co-PVC-polymer, impact modified PVC, and more complex copolymers like PVC/PCTFE-PVDC (sold as Aclar by Honeywell or Kel-F by 3M, Inc.).

The vinyl halide polymers particularly useful in the present invention are homopolymers and copolymers made by the polymerization of vinyl chloride alone or in admixture with one or more polymerizable olefinic monomers copolymerizable therewith. The most preferred vinyl polymer, or resin, is polyvinylchloride (PVC) homopolymer produced by mass polymerization or suspension polymerization. However, it is well understood that the invention may be applied to others of the above-described polymers, and is not limited in any way.

The vinyl halide polymer usually has a molecular weight of at least 5 kDa. For example, the vinyl halide polymer has a molecular weight of at least 7 kDa, or at least 10 kDa, or at least 15 kDa, or at least 20 kDa, or at least 25 kDa, or at least 50 kDa. For example, the vinyl halide polymer has a molecular weight in the range of 5 kDa to 150 kDa, or from 5 kDa to 120 kDa, or from 10 kDa to 100 kDa, or from 10 kDa to 80 kDa.

The molecular weight of the vinyl halide polymer in this context is the so-called number-averaged molecular weight, also identified as $\overline{M_n}$ or simply M$_n$. The values of $\overline{M_n}$ mentioned here are determined with GPC according to and under observation of the further conditions detailed in the section "test methods". It is common knowledge that the molecular weight information given here is relative to the calibration standard and test conditions employed. Other analytical methods and/or deviation from the testing protocol given in the test method are likely to result in other values for molecular weight. Further it is known that this GPC usually has a cut-off around 500 Da. Constituents of less than this molecular weight cannot be analyzed.

Further constituents of the plastic composition polymers are different from vinyl halide polymers, additives, contamination or dirt, or a combination of two or more thereof.

A group of the further constituents to the plastic composition, the so-called additives usually have a molecular weight of less than 5 kDa. For example, the further constituents have a molecular weight of less than 4 kDa, less than 3 kDa, less than 2 kDa or less than 1 kDa. Very often, the further constituents have a molecular weight of at least 80 Da. The molecular weight of the further constituents can be calculated based on the molecular weight of the composing atoms.

The number of additives and contaminants is illimited, and one or more of these can be present. The additives can be categorized by structural features as well as by function.

For example, additives present in the plastic composition can be antioxidants like UV stabilizers and flame retardants; rheological modifiers like softeners and plasticizers like epoxidized soy bean oil for the manufacturing of items or for the vinyl halide polymer after manufacture, e.g. during use; antioxidants; antistatic agents; heat stabilizers; lubricants and slipping agents; fillers; colorants, pigments and dyes; impact modifier like e.g. polyacrylate core shell impact modifiers and chlorinated polyethylene impact modifier; processing aids, e.g. chlorinated paraffine polyacrylates; blowing agents; antifog agents and biocides.

Based on structural features, additives can be organic, inorganic or hybrid; hybrid means having features of both organic and inorganic.

A group of more focused inorganic additives are lead compounds, i.e. salts and/or complexes comprising lead (Pb). Some of these are heat stabilizers and/or flame retardants. Examples of inorganic additives possibly present in vinyl halide polymer containing compositions are salts of Pb, Cd, Ca, Zn, Ba, and Sn, Ti and combinations thereof. These inorganic additives are often used as heat stabilizers, UV stabilizers, and fillers.

The organic additives can serve a wide range of duties, for example, as plasticizers and heat stabilizers.

Examples of organic additives are carboxylates of heavy metals, such stearates of lead, calcium, barium and zinc; octoates of calcium, barium and zinc; dialkyltin laurate, - maleate and bis(isooctylthioglycollate); lead phthalate; lead maleate; dialkylphthalates and mixed aliphatic-aromatic phthalates; trialkyl mellitates; dialkyl adipates and sebacates. Two of the most known additives from this group are Di(2-ethylhexyl)-phthalate and normal and/or dibasic lead stearate, tribasic lead phthalate, tribasic lead sulphate, dibasic lead phosphite.

The first and the second liquid organic phase can be of any kind known to and considered possibly useful by a skilled person to swell and/or dissolve the plastic composition.

For example, the first liquid organic phase may comprise at least one solvent selected from a group of solvent types consisting of ketones, ethers, aromatics, halogenated solvents, dimethylformamide (DMF), dimethylacetamide (DMA) and Dimethyl sulfoxide (DMSO), or a combination of two or more solvents, either from the same or different solvent types. Examples of preferred solvent types are ketones and ethers.

Solvents of the solvent types of ketones, ethers and halogenated solvents can be either aliphatic or aromatic. The aliphatic ones can be acyclic or cyclic. Possibly, the solvent may comprise more than a single carbon cycle. Moreover, a cyclic solvent may have one or more heteroatoms in its cycle, i.e. an atom or atoms which are structural part of the cycle but not carbon (-C-).

Some examples of acyclic ketones are acetone, ethyl methyl ketone (MEK), diethyl ketone, methyl isobutyl ketone, methyl isoamyl ketone, di-(isobutyl) ketone, 3-pentanone, 2-pentanone.

Some examples of cyclic ketones are cyclopentanone, cyclohexanone, cycloheptanone and isophorone.

Some examples of cyclic ethers are tetrahydrofuran (THF), 2-methyl tetrahydrofurane and 1,4 dioxane.

Some examples of aromatics are toluene, benzene and xylene.

Chlorinated solvents are usually another choice when thinking of halogenated solvents. Some examples of halogenated solvents are dichloromethane, methylene chloride, 1,1-dichloreoethylene, Ethylene dichloride, chloroform, 1,1-dichloroethane, trichloroethylene, carbon tetrachloride, chlorobenzene, o-dichlorobenzene.

Further, the at least one organic solvent can be selected from ionic liquids, such as DES and NADES.

Ionic Liquids are abbreviated IL. An ionic liquid is a salt of two components which is in liquid state at temperatures below or equal to 100 °C.

DES is an abbreviation and stands for Deep Eutectic Solvents. DES are organic solvents composed of a mixture of two or more organic compounds, which are capable of interacting via hydrogen bonds. So, a DES comprises at least one component which is a hydrogen bond acceptor (HBA), such as a halide salt, and at least a further component, which is a hydrogen bond donor (HBD). DES can be obtained by mixing the components at an elevated temperature, e.g. around 100 °C for 1 to 2 hours. Alternatively, DES can be obtained by grinding the components at room temperature until a clear liquid is formed. The melting point of the DES is lower than the melting point of each of the individual components. Such is called an eutectic point. DES have a melting point below room temperature, so DES are liquids at room temperature.

Examples of the HBA component can be selected from the group consisting of choline derivatives, tetraalkylammonium salts, dialkylaminium salts, organic phosphonium salts and metal halides. These derivatives and salts are often chloride of fluorides.

Examples of HBAs are chloride and bromide of zinc, tin, aluminum, gallium, indium, chromium, cobalt, copper, iron and nickel; choline chloride, choline fluoride, 2-(chlorocarbonyloxy)-N,N,N-trimethylethenaminium chloride, betaine, nicotinic acid, histidine, proline, glycine, alanine, , tetramethylammonium chloride, tetra-n-ethylammonium chloride, tetra-n-propyl-ammonium chloride tetra-n-butylammonium chloride, N,N-diethylethanolammonium chloride, N-ethyl-2-hydroxy-N,N-dimethylethanaminium chloride, N-benzyl-2-hydroxy-N,N-dimethylethanaminium chloride, Benzyltriphenylphosphonium chloride, methyltriphenylphosphonium chloride, tetrabutylphosphonium chloride and lidocaine.

Examples of the HBD component can be selected from the group consisting of amines; amides; amino acids; mono- and polyvalent alcohols, such as bivalent, trivalent alcohols and sugars; organic acids, such as mono- and polyvalent carboxylic acids, such as bivalent, trivalent and tetravalent carboxylic acids, cyclic esters like lactones.

Examples of individual HBD components are urea, glycerol, glucose, fructose, 1,4-butanediol, thymol, PTS, phenyl ethanol, such as lactic acid, oxalic acid, citric acid, succinic acid, amino acids, hexanoic acid, octanoic acid, decanoic acid, dodecanoic acid, adipic acid, acetamide, phenol, benzamide, benzoic acid, ethylene glycol, triethylene glycol, malonic acid, thiourea, 1,3-dimethyl urea, 1-methyl urea, menthol, 1-naphthol.

Preferred DES may be composed of these HBD-HBA combinations: choline chloride - urea; choline chloride - ethylene glycol; choline chloride - glycerol.

The molar ratio HBD:HBA is often in the range of 1.8:1 to 3.3:1, for example 2:1 and 3:1.

Further, DES may be composed of one HBD and two HBA, for example choline chloride - malic acid - glycerol. The molar ratio may be varied and could be, e.g., 1:1:1, 2:1:3 or 1:2:1.

DES preferred in the present invention can be all those considered suitable by a skilled person to swell PVC or another vinyl halide polymer. DES can be prepared in a very simple manner. The corresponding amounts of each component (mole ratios) are weighed in dissolved in water, then mixed and homogenized, and finally excess water is removed at 50°C under vacuum until a clear viscous liquid is obtained.

NADES is also an abbreviation and stands for Naturally based DES. The NADES are based on natural products, such as organic acids, amino acids, sugars and choline derivatives. NADES is a subgroup within DES.

In a preferred embodiment, the first liquid organic phase may comprise at least one solvent selected from a group consisting of 3-pentanone, 2-pentanone, DMF, MEK, 4-Methylpentan-2-one, acetonew, ethyl acetate, cyclohexanone, cyclopentanone, DMA and THF.

This is an embodiment of the first aspect of the invention. It may be combined with any single other embodiment or plurality of embodiments of the first aspect of the invention.

A way to find organic solvents suited for a first and/or second organic phase is to pay attention to the Hansen solubility parameter $\delta$, which can be found in tables, see for example Table A.1 in: C.M. Hansen, "Hansen Solubility Parameters - A user's handbook", 2000, by CRC Press. The parameter $\delta$ is defined as:

$$\delta = \sqrt{\delta_d^2 + \delta_p^2 + \delta_h^2} \qquad (1)$$

As mentioned, $\delta_d$, $\delta_p$ and $\delta_h$ are found in the literature and $\delta$ can be calculated according to formula (1).

In an embodiment, organic solvents suited for the first organic phase should have a $\delta$ in the range from 18 to 25 MPa$^{0.5}$. This is an embodiment of the first aspect of the invention. It may be combined with any single other embodiment or plurality of embodiments of the first aspect of the invention.

Preferably, the first liquid organic phase has a relatively low density, i.e. in the range from 0.7 to 1.2 g/cm$^3$, or from 0.7 to 1.0 g/cm$^3$, or from 0.7 to 0.9 g/cm$^3$. So, the first liquid organic phase preferably has a density of 1.0 g/cm$^3$ or less, e.g. about 0.9 g/cm$^3$, or 0.8 g/cm$^3$. It is believed, without being bound to a theory, that a vinyl halide polymer swollen by a solvent having a density of 1.0 g/cm$^3$ or less, has a reduced density when compared with non-swollen state, and may swim on an aqueous phase because of a certain buoyancy.

This is an embodiment of the first aspect of the invention. It may be combined with any single other embodiment or plurality of embodiments of the first aspect of the invention.

In an embodiment of the process of the invention, the first liquid organic phase may comprise at least one solvent having a density in the range from 0.7 to 1.0 g/cm$^3$, which is selected from a group of solvent types consisting of ketones, ethers, aromatics and dimethylformamide (DMF), or a combination of two or more solvents, either from the same or different solvent types. Examples of preferred solvent types are ketones and ethers.

Examples of preferred solvents having a density in the range from 0.7 to 1.0 g/cm$^3$ useful for the first liquid organic phase are selected from the group consisting of: acyclic ketones like acetone, ethyl methyl ketone (MEK), diethyl ketone, methyl isobutyl ketone, methyl isoamyl ketone, di-(isobutyl) ketone, 3-pentanone, 2-pentanone; cyclic ketones like cyclopentanone, cyclohexanone, cycloheptanone and isophorone; cyclic ethers like tetrahydrofuran and 2-methyl tetrahydrofurane; aromatics like toluene, benzene and xylene.

This is an embodiment of the first aspect of the invention. It may be combined with any single other embodiment or plurality of embodiments of the first aspect of the invention.

Moreover, PVC and/or vinyl halide polymers should have a certain solubility in the first and second liquid organic phase, yet more preferred at room temperature.

Preferably, the vinyl halide polymer, such as PVC, has a good solubility in the second liquid organic phase. Solubility is considered "good", if 100 ml of the solvent dissolve 5 g or more of the vinyl halide polymer, for example PVC. Each of the first and the second liquid organic phase can be composed of a single constituent or two or more constituents, which is a mixture of constituents.

This is an embodiment of the first aspect of the invention. It may be combined with any single other embodiment or plurality of embodiments of the first aspect of the invention.

In an embodiment of the process of the invention, organic solvents suited for the first organic phase may have a Hansen solubility parameter $\delta$ in the range from 18 to 25 MPa$^{0.5}$ and a density in the range from 0.7 to 1.2 cm$^3$/g, e.g., in the range from 0.7 to 0.98 cm$^3$/g.

This is an embodiment of the first aspect of the invention. It may be combined with any single other embodiment or plurality of embodiments of the first aspect of the invention.

The first and the second organic phase can be same or different. This is understood as that each organic phase may be same or different with regard to the choice of constituents, number of constituents and amounts of constituents forming the first and the second liquid organic phase. For example, the first and the second liquid organic phase may be same with regard to number and choice of constituents, but different with regard to amounts thereof in each liquid organic phase.

This is an embodiment of the first aspect of the invention. It may be combined with any single other embodiment or plurality of embodiments of the first aspect of the invention.

In an embodiment of the invention, the first liquid organic phase has a density of 1.0 g/cm$^3$ or less, such as in the range from 0.7 to 1.0 g/cm$^3$, and the vinyl halide polymer, such as PVC has a good solubility in this liquid organic phase. Then a single liquid organic phase can be used as first and second liquid organic phase.

This is an embodiment of the first aspect of the invention. It may be combined with any single other embodiment or plurality of embodiments of the first aspect of the invention.

In a further embodiment of the invention, the first and second liquid organic phase may be a same, single liquid organic phase, but used as a swelling agent at a lower temperature, e.g. in the range from 10 to 40 °C, while used for dissolving at a higher temperature, e.g. in the range from 60 to 150°C.

This is an embodiment of the first aspect of the invention. It may be combined with any single other embodiment or plurality of embodiments of the first aspect of the invention.

In yet another embodiment of the invention, the first and second liquid organic phase are composed of the same two or more different organic solvents. However, the ratio of these organic solvents is different in the first and the second liquid organic phase.

This is an embodiment of the first aspect of the invention. It may be combined with any single other embodiment or plurality of embodiments of the first aspect of the invention.

The first and second liquid organic phase may be even same in two or all of the above feature, but different with regard of temperature when used. For example, the first liquid organic phase may have a certain composition, such as 100 % methyl ether ketone and employed at a temperature of 40°C or less, while the second liquid organic phase is identical with the first liquid organic phase but employed at a temperature in the range from 10 to 150 °C.

This is an embodiment of the first aspect of the invention. It may be combined with any single other embodiment or plurality of embodiments of the first aspect of the invention.

The first liquid organic phase comprises at least one, optionally a combination of two or more constituents. Main constituents of the first liquid organic phase are organic solvents. The organic solvents forming the combination are miscible in each other, by preference. The first liquid organic phase may contain further constituents, different from aforementioned organic solvents.

In general, all particulars described for the first liquid organic phase are also valid and preferred for the second liquid organic phase, if not excluded by logic, which is readily understood by a skilled person. In the further description, the first liquid organic phase is described. As mentioned, all these embodiments are also applicable and valid for the second liquid organic phase unless indicated otherwise.

Each of the first, the second or both liquid organic phases may comprise some so-called non-solvents. A non-solvent in the present context is a compound in which PVC dissolves by less than 1 g/ Litre of non-solvent. Usually, the total of all non-solvents in one of the liquid organic phases is less than 20 vol%, or less than 10 the vol% based on the total volume of the liquid organic phase. Some examples of compounds which are non-solvents for PVC, are water, alcanes, alcohols, non-polar organic molecules.

With regard to water, the amount of non-solvent in the first liquid organic phase should be as little as possible, e.g. 50 g/l at most, because it obstructs a swelling of the vinyl halide polymer in step iv).

This is an embodiment of the first aspect of the invention. It may be combined with any single other embodiment or plurality of embodiments of the first aspect of the invention.

The first liquid organic phase, which is provided in step ii) may comprise as constituent at least one organic solvent with a dipole moment of at least 1.6, for example at least 1.8, 2.0, 2.2, 2.4, 2.6, 2.8, 3.0, 3.2, 3.4, or at least 3.8.

More preferred, at least one organic solvent has a dipole moment of at least 2.4, or at least 2.6. Often, the dipole moment is at most 4.2, or 4.0, 3.8, 3.6, 3.4, or at most 3.2. Any organic solvent or combination of two or more thereof, or organic solvent combination with further organic constituents dissolved in the organic phase which is known to a skilled person and considered suited here, can be employed. In a preferred variant, the first liquid organic phase as a whole has a dipole moment as described just above. This could be true, even if one or more constituents of the first liquid organic phase have a dipole moment which is beneath the mentioned value. The dipole moment can be determined by refractive index measurement as described in the test methods' section. This is an embodiment of the first aspect of the invention. It may be combined with any single other embodiment or plurality of embodiments of the first aspect of the invention.

Examples of a first liquid organic phase contain one or more of these organic solvents: acetone, methyl ethyl ketone (MEK) (@≤40 °C) or less. Indications in parentheses given with a solvent or liquid organic phase indicates the temperature or temperature range in which this solvent or liquid organic phase is suited. This is an embodiment of the first aspect of the invention. It may be combined with any single other embodiment or plurality of embodiments of the first aspect of the invention.

Preferably, at least one, better all of the organic solvents constituting the first liquid organic phase have a dipole moment of more than 1.6. This is an embodiment of the first aspect of the invention. It may be combined with any single other embodiment or plurality of embodiments of the first aspect of the invention.

The second liquid organic phase, which is provided in step ix) can be the same or different from the first liquid organic phase, as already described. In an embodiment, the second liquid organic phase has the same composition as the first liquid organic phase, but has a higher temperature. This is an embodiment of the first aspect of the invention. It may be combined with any single other embodiment or plurality of embodiments of the first aspect of the invention.

The temperature of the second liquid organic phase can be 10°C or more, for example 20 °C or more, or 30 °C or more, or 40 °C or more. Often, the temperature of the second liquid organic phase is at most 150 °C or less, for example, 130 °C or less, or 110 °C or less. So, the temperature of the second liquid organic phase could be in the range from 10 °C to 150 °C, or from 20 °C to 150 °C, or from 40 °C to 130 °C, or from 40 to 110 °C, or in the range from 30 to 80°C, or from 30 to 70 °C, or from 40 to 80°C, or in the range from 40 to 70 °C. This is an embodiment of the first aspect of the invention. It may be combined with any single other embodiment or plurality of embodiments of the first aspect of the invention.

Preferably, at least one, better all of the organic solvents constituting the second liquid organic phase have a dipole moment of more than 1.6. This is an embodiment of the first aspect of the invention. It may be combined with any single other embodiment or plurality of embodiments of the first aspect of the invention.

In a further embodiment of the invention, vinyl halide polymers such as PVC should have a good solubility in the second liquid organic phase. For example, vinyl halide polymer and/or PVC should have a solubility of at least 2 g g/ 100 ml, or at least 5 g/ 100 ml. Often, the solubility is not unlimited. For example, the vinyl halide polymer and/or PVC may have a solubility of not more than 50 g/ 100 ml, or 30 g / 100 ml.

Some examples of possibly suited second liquid organic phases are these: cyclopentanone (@$\geq$ 40 °C), cyclohexanone, N,N-dimethylacetamide (DMA), dimethylformamide (DMF), tetrahydrofuran (THF), 2-butanone (MEK) (@$\geq$60°C).

Indications in parentheses given with a solvent or liquid organic phase indicates the temperature or temperature range in which this solvent or liquid organic phase is suited.

It is a feature of the second liquid organic phase that PVC is dissolved upon contact with the second liquid organic phase. Dissolving in this context means that more than 95 wt.% of a PVC sample of 2 mm x 2 mm x 2 mm is dissolved to at least 95%, based on the initial weight of the sample, at the boiling point of the second liquid organic phase and within 60 minutes. If the second liquid organic phase comprises more than one organic solvent, the boiling point to determine dissolution is the boiling point of the lowest boiling constituent of the second liquid organic phase. If the lowest boiling point of the second liquid organic phase is higher than 150 °C, the temperature for testing the 95 wt.% dissolution criterium is 150 °C. This is an embodiment of the first aspect of the invention. It may be combined with any single other embodiment or plurality of embodiments of the first aspect of the invention.

In another embodiment, an amount of a non-solvent can be added to the second liquid organic phase. For example, the non-solvent is an organic or inorganic solvent in which vinyl halide polymers such as PVC are not fully soluble, or even insoluble. Examples of non-solvents are alcohols, alkanes & water. The alcohols can be aliphatic, and further monovalent or polyvalent, such as di- or trivalent. They can also be acyclic and cyclic, linear or branched. Examples of monovalent alcohols: C1 - C20, or C1 - C10, such as methanol, ethanol, propanol, butanol, pentanol, hexanol, heptanol, octanol, decanol, dodecanol, iso- and neo-alcohols thereof; examples of divalent alcohols:C2-C10, or C2 - C6, such as Ethan-1,2-diol, Propan-1,2-diol, Propan-1,3-diol, Butan-1,2-diol, Butan-1,3-diol, Butan-1,4-diol, Butan-2,3-diol, Pentan-1,5-diol, Hexan-1,6-diol, Octan-1,8-diol, Nonan-1,9-diol and Decan-1,10-diol; an example of a trivalent, acyclic and alcohol linear is glycerol; a trivalent, acyclic and branched alcohol is trimethylol propane (TMP). Examples of cyclic monovalent alcohols are cyclopentanol and cyclohexanol.

Examples of alkanes are C5 - C40, or C6 - C20, or C6 - C12, such as pentane, hexane, heptane, octane, nonane, decane, undecane, dodecane, tridecane, tetradecane, pentadecane, hexadecane, heptadecane, octadecane, nonadecane, icosane, triacontane and tetracontane. The alkanes are preferably linear, branched or contain or form one or more cycles, i.e. be cyclic.

This is an embodiment of the first aspect of the invention. It may be combined with any single other embodiment or plurality of embodiments of the first aspect of the invention.

The first and the second aqueous phase can be of any kind known to and considered possibly useful by a skilled person in the present context. The first and/or the second aqueous phase may comprise at least 30 wt.%, for example at least 50 wt.%, or at least 70 wt.%, or at least 80 wt.%, at least 90 wt.%, or at least 95 wt.% of water. The aqueous phase may consist up to and including 100 wt.% of water. The water may be of any kind, such as tap water or recycled water or deionized.

In an embodiment, the aqueous phase may comprise one or more salts. The salt can be organic or inorganic, preferably inorganic salt. This may be anyone or any number of salts known to and considered useful by a skilled person in the present context. The salts may have mono-, di- or trivalent cations, and/or mono- through hexavalent anions.

The first and/or the second aqueous phase comprises water, and may further comprise up to 80 wt.% of one or more salts. Preferably, only one salt is used to prepare the aqueous phase. The maximum concentration of a salt depends on its solubility. A skilled person knows where to look up such information, or to conduct a simple experiment to find out by himself. A source to look up the maximum concentration of a certain inorganic salt at a given temperature, e.g. 20 °C, is the CRC Handbook of Chemistry and Physics, 95th edition (2014), Section 5-190 to 5-195.

For example, the first and/or the second aqueous phase may comprise up to 65, 60, 55,50, 45, 40, 35, 30, 25, 20, 15, 10 wt.% of one or more salts. Often the first aqueous phase comprises at least 1, 2, 3, 4 or at least 5 wt.% of one or more salts. Preferably, the first aqueous phase may comprise one or more salts in the range from 1 to 80 wt.%, 5 to 80 wt.%, 10 to 80 wt.%, 10 to 70 wt.% 10 to 65 wt%., 10 to 60 wt.%, 10 to 55 wt.%, 10 to 50 wt.%, 10 to 45 wt.%, or 10 to 40 wt.% of one or more salts. Preferably, all the above wt.% of salt in water refer to a temperature of 20 °C, and the wt.% refer to the total amount of the aqueous phase.

This is an embodiment of the first aspect of the invention. It may be combined with any single other embodiment or plurality of embodiments of the first aspect of the invention.

Preferred salts to be dissolved in the first and/or the second aqueous phase are selected from the group consisting of: group Ia,b or IIa,b -halides, -carbonates, - acetates, - phosphates, -nitrates, -sulfates, and -hydroxides; yet more preferred are group Ia,b hydroxides, -halides, such as NaCl ,CaCl$_2$, K$_2$CO$_3$ and ZnCl$_2$.

This is an embodiment of the first aspect of the invention. It may be combined with any single other embodiment or plurality of embodiments of the first aspect of the invention.

In an embodiment, the first and/or the second aqueous phase has a density of more than 1.0 g/cm$^3$, for example of 1.2 g/cm$^3$ or more, or 1.3 g/cm$^3$ or more, or 1.4 g/cm$^3$ or more, or 1.5 g/cm$^3$ or more. The first aqueous phase may have a density of up to and including 2.0 g/cm$^3$, for example 1.95 g/cm$^3$, 1.90 g/cm$^3$, 1.8 g/cm$^3$, 1.7 g/cm$^3$, 1.6 g/cm$^3$, or 1.5 g/cm$^3$. Also, the first aqueous phase may have a density from 1.0 to 2.0 g/cm$^3$, or from 1.0 to 19.5 g/cm$^3$ or from 1.2 to 1.8 g/cm$^3$, or from 1.3 to 1.8 g/cm$^3$, or from 1.4 to 1.8 g/cm$^3$, or from 1.5 to 1.8 g/cm$^3$, or from 1.4 to 1.7 g/cm$^3$, or from 1.4 to 1.6 g/cm$^3$, or from 1.4 to 1.5 g/cm$^3$, or from 1.3 to 1.7 g/cm$^3$, or from 1.3 to 1.6 g/cm$^3$, or from 1.3 to 1.5 g/cm$^3$. Preferably, all the above density of the first aqueous phase refer to a temperature of 20 °C.

An example of an aqueous phase of a density of 1.96 is an aqueous phase with 70 wt.% ZnCl$_2$ at 20 °C, based on the total amount of the aqueous phase. An aqueous phase with a density of 1.35 can be obtained by dissolving 35 wt. % of CaCl$_2$.

This is an embodiment of the first aspect of the invention. It may be combined with any single other embodiment or plurality of embodiments of the first aspect of the invention.

The process of the invention according to the first embodiment is directed to making a vinyl halide polymer and comprises a number of steps. These steps are performed in the order indicated by the numbers, but as an option, there may exist further process steps not identified here, which are performed between any two steps described in consecutive order in the present invention and/or by consecutive numbering. The steps indicated as inventive in the first embodiment are those which are required as a minimum to conduct the process of the invention.

Moreover, the process of the invention can be conducted in batch mode or continuously, or part-part. Some equipment depends on the mode of operation. A skilled person is generally capable of selecting the right equipment depending on the mode of operation.

The term "making a vinyl halide polymer" as used herein describes that the vinyl halide polymer is obtained by a manufacturing process. In the present case, this is not a manufacturing from monomer sources or carbon feedstock. The manufacturing of this process is a creation of vinyl halide polymer for commercial purposes from a plastic composition, which is a feed of used stuff, or materials. Accordingly, the making of a vinyl halide polymer refers to a purification or recovery or recycling of a plastic composition comprising vinyl halide polymer from such feed of used stuff, or materials.

A particularity of the process of the invention is that the molecular weight and distribution of the vinyl halide polymer does not undergo any significant changes during this process. The molecular weight, average molecular weight and molecular weight distribution of the vinyl halide polymer remains pretty much identical, or reduces by not more than approx. 10%, for example solely not more than approx. 5 % in its number averaged molecular weight, when comparing the number averaged molecular weight of the vinyl halide polymer in the plastic composition of the feed and the number averaged molecular weight of the vinyl halide polymer obtained as a result of the process of the invention.

In some process or treatment steps, agitation can be used to speed up and/or assist a process step. Agitation may be made by all means and techniques known to and considered suited in the present process by a skilled person. For example, a mechanical stirrer can be used in order to stir a mixture, such as the plastic composition and the first liquid organic phase, or the feed composition of the above and the first aqueous phase. Another way instead of or in addition to stirring to accomplish agitation may be applying a stream of gas. For example, air or an inert gas or mixture of gases could be bubbled from the bottom of a vessel and through the slurry or mixture therein. Or a jet of air could be pressed through a nozzle in the vessel's wall.

In step i), a plastic composition is provided, wherein the plastic composition comprises at least 10 wt.% of vinyl halide polymer and one or more additives, as described above. Providing may be accomplished by any means and techniques known to and considered suited in the present process by a skilled person. For example, providing may placing the plastic composition in a vessel, like a beaker, a pot, a round bottom flask, a mixer, a feeder, a tank and the like.

In an embodiment of the process of the invention, the providing of plastic composition comprises a grinding of the plastic composition into particles of the plastic composition. The plastic composition's origin can be post consumer and post industrial waste as already mentioned but also originate from buildings and other construction, automotive, transportation or industrial uses. These plastic compositions can be large items or parts of items. Then, the plastic compositions size can be disadvantageous to run the process of the invention. In another embodiment of the process of the invention, the providing in step i) comprises a grinding of the plastic composition into particles of plastic composition, wherein at least 75 % of the resulting particles have a size of 5 cm or less, based on the total number of the particles ground.

Preferably, at least 80, 90, 95 or 97 % of the resulting particles of plastic composition have a size of about 5 cm or less. Often, they have a size of at least 0.2 cm, or at least 0.5 cm. Preferably, at least 80, 90, 95 or 97 % of the resulting particles have a size of about 4 cm or less. Often, they have a size of at least 0.2 cm, or at least 0.5 cm. Preferably, at least 80, 90, 95 or 97 % of the resulting particles have a size of about 3 cm or less. Often, they have a size of at least 0.2 cm, or at least 0.5 cm. Preferably, at least 80, 90, 95 or 97 % of the resulting particles have a size of about 2 cm or less. Often, they have a size of at least 0.2 cm, or at least 0.5 cm. Preferably, at least 80, 90, 95 or 97 % of the resulting particles of plastic composition have a size of about 1 cm or less. Often, they have a size of at least 0.2 cm, or at least 0.5 cm.

This is an embodiment of the first aspect of the invention. It may be combined with any single other embodiment or plurality of embodiments of the first aspect of the invention.

In another embodiment of the process of the invention, the grinding is made using at least one of the techniques selected from universal milling, roller milling, cut milling, single shaft shredder, pulverizer and crusher machine.

This is an embodiment of the first aspect of the invention. It may be combined with any single other embodiment or plurality of embodiments of the first aspect of the invention.

In another embodiment of the process of the invention, the providing in step i) comprises a pre-treatment. The pre-treatment can be performed prior to grinding or after having ground the plastic composition into particles of plastic composition. The material provided to the pre-treatment process is labelled as feed composition. Depending on the sequence of steps within step i), the feed composition can be either the plastic composition or the particles of plastic composition. The pre-treatment can be performed in any kind of vessel a skilled person knows and considers useful for conducting this step. In principle, all vessels can be used, like described above for performing step i). Providing is meant as adding into the vessel. Agitation as described below can be employed.

The pre-treatment comprising at least these pre-treatment process steps a) through e), in that order:

a) Providing a feed composition; this can be either the providing described with step i) or hand-over of the particles of plastic composition from grinding. It can be batchwise or just a feed.

b) Providing a second aqueous phase comprising water and at least one salt; wherein the salt is dissolved in the water at least partially; wherein the second aqueous phase has a density in the range from 0.9 and 1.4; the second aqueous phase can be characterized by the same features as the first aqueous phase; the second aqueous phase can be same or different from the first aqueous phase; the providing can be accomplished in the same manner as described below for step ii); it can be same or different from the contacting in step ii).

c) Contacting the second aqueous phase with the feed composition to form a slurry; the contacting can be performed in the same way as described below regarding the contacting in step iii), including optional agitation; it can be same or different from the contacting in step iii).

d) Separating a sediment formed in the slurry from the slurry and possibly floating particles, wherein the sediment comprises at least a part of the plastic composition;

e) Removing water from the sediment.

In step c), some elements of the feed composition may have a density higher than the second aqueous phase forming a fraction $F_{HD}$. These elements will sink to down in the slurry and/or propagate to the bottom part of the slurry and form a sediment, in case the slurry is agitated. Other elements of the feed composition may have a density less than the second aqueous phase forming a fraction $F_{LD}$. These elements will swim up in the slurry and/or float in the upper part of the slurry, in case the slurry is agitated. Further elements of the feed composition will remain somewhere between the upper and lower part of the slurry.

In step d) the sediment is separated from the slurry, which can be achieved by any technique known to and considered useful by a skilled person. The sediment may comprise the fraction $F_{HD}$ of the feed composition which has a density higher than the density of the first aqueous phase. The fraction $F_{HD}$ may comprise all kinds of particles having a density higher than the density of the first aqueous phase. For example, particles of or mainly comprising PVC, such as the plastic composition; glass; metal; stone, PVC dust, mud, dust may be found in this fraction $F_{HD}$. This separation of the sediment, also referred to as gravity separation, can be achieved, for example, by decantation or skimming of the slurry from the sediment. Another way of separation could include a separator, positioned in an about horizontal manner, which divides the slurry into an upper and a lower part, wherein the lower part contains the plastic composition. In another variant of separation, separation can be achieved by centrifugation, whereby parts of the slurry having a lower density remain more central and parts of higher density are driven to the peripheral part of the centrifugation device. Examples of suited centrifugation devices are centrifuges, rotating tubes, tumblers etc., cyclones, hydrocyclones.

In step e), water is removed from the sediment, which comprises plastic composition. Thereby, the plastic composition is obtained which will be subject to step ii). In principle, any means or technique known to a skilled person can be employed which he knows and considers suited therefor. For example, the sediment may be treated in a centrifuge, a tumbler, a rotating tube, by air jet, vacuum, cycloning, , vacuum and the like. Moreover, a combination of two or more of the just mentioned techniques and devices may be used.

This is an embodiment of the first aspect of the invention. It may be combined with any single other embodiment or plurality of embodiments of the first aspect of the invention.

In step ii), a first liquid organic phase is provided, as described above. This can be accomplished by any means and techniques known to and considered suited by a skilled person. For example, providing of the first liquid organic phase can be a pouring, purging, dispensing, or a dripping.

In step iii), both, the plastic composition and the first liquid organic phase are brought into contact and the plastic composition is swollen in step iv) at least partially by at least 10% in its volume, wherein a swollen material is formed. This step can be enhanced by agitation.

In an embodiment of the process of the invention, the swelling in step iv) is characterized by at least one of these features:

(a) a temperature of both, the plastic composition and the first liquid organic phase, in the range from 10 to 50 °C, for example from 15 to 50 °C, or 20 to 50 °C; or from 25 to 50 °C; or from 30 to 50 °C, or from 35 to 50 °C, or from 40 to 50 °C; or from 10 to 45 °C, or 15 to 45 °C, or 20 to 45 °C, or from to 25 to 45 °C, or from 30 to 45 °C, or from 35 to 45 °C; or from 10 to 40 °C, or 15 to 40 °C, or 20 to 40 °C, or from 25 to 40 °C, or from 30 to 40 °C; or from 10 to 35 °C, or 15 to 35 °C, or 20 to 35 °C, or from to 25 to 35 °C; or from 10 to 30 °C, or 15 to 30 °C, or 20 to 30 °C, or from to 25 to 30 °C.

(b) a swell time in the range from 0.2 to 6 hours, or 0.5 to 6 hours, for example from 1 to 6 hours, from 2 to 6 hours, from 3 to 6 hours, from 4 to 6 hours, or 5 to 6; or from 0.5 to 3 hours, or 1 to 3 hours, or 1.5 to 3 hours, or from 2 to 3 hours; or from 0.5 to 1.5 hours; or from 3 to 5 hours, or 3.5 to 5 hours, or 3 to 4.5 hours.

(c) a density of the swollen plastic composition obtained in step iv) in the range from 1.0 to 1.4 $g/cm^3$, for example from 1.05 to 1.4, 1.1 to 1.4, 1.15 to 1.5, 1.2 to 1.4, 1.25 to 1.4 or from 1.3 to 1.4 $g/cm^3$, or from 1.05 to 1.3, 1.1 to 1.3, 1.15 to 1.5, 1.2 to 1.3, 1.25 to 1.3, or 1.05 to 1.2, 1.1 to 1.2, 1.15 to 1.2 $g/cm^3$.

(d) a swell rate Q of at least 1.05, or 1.1, 1.2, 1.3, 1.4, 1.5, 1.6, 1.7, 1.8, 1.9 or at least 2.0. Often, the swell rate does not exceed 1.2

Moreover, or a combination of any two or more of the above features can apply. Preferred embodiments of with combinations of the above features are: (a), (b), (a)+(b), (c), (a)+(c), (b)+(c), (a)+(b)+(c), (d), (a)+(d), (b)+(d), (a)+(b)+(d), (c)+(d), (a)+(c)+(d), (b)+(c)+(d), (a)+(b)+(c)+(d).

This is an embodiment of the first aspect of the invention. It may be combined with any single other embodiment or plurality of embodiments of the first aspect of the invention.

Then, a first aqueous phase is provided in step v), wherein the first aqueous phase has a density in the range from 0.9 to 2.0.

In an embodiment, the density of the aqueous phase in this event is about 1.0 $g/cm^3$. Then, the first aqueous phase may consist mainly of water. Mainly in this context means that the first aqueous phase comprises at least 90, 93, 95, 97, 98 or 99 wt.% of water.

This is an embodiment of the first aspect of the invention. It may be combined with any single other embodiment or plurality of embodiments of the first aspect of the invention.

In another embodiment, the density of the first aqueous phase is less than 1.0 $g/cm^3$, for example between 0.8 and < 1.0 $g/cm^3$. Then, the first aqueous phase may consist of water and may further comprise an organic solvent which is miscible in water and has a density of less than 1.0 $g/cm^3$. For example, acetone, ethanol and methanol could be such organic solvent.

This is an embodiment of the first aspect of the invention. It may be combined with any single other embodiment or plurality of embodiments of the first aspect of the invention.

In another embodiment, the density of the first aqueous phase is more than 1.0 $g/cm^3$, for example around or more than 1.2, or more than 1.4 $g/cm^3$. So, the density may be in the range from >1.0 $g/cm^3$ to 2.0 $g/cm^3$. Then, the first aqueous phase may consist of water and may further comprise one or more salts, either organic or, more preferred, inorganic salts. For a given salt, the density of an aqueous salt solution can be adjusted by the amount of salt added. The maximum density depends on the salt chosen. For example, a 25 wt.% NaCl-solution has a density of up to 1.2 $g/cm^3$ at 20 °C, a 40 wt.% $CaCl_2$-solution has a density of 1.4 $g/cm^3$ at 20 °C.

This is an embodiment of the first aspect of the invention. It may be combined with any single other embodiment or plurality of embodiments of the first aspect of the invention.

In step vi), the swollen material formed in step iv) and the first aqueous phase provided in step v) are brought into contact to form a suspension. Again, agitation can be used to enhance this step, i.e. to speed up and/or improve this process step.

As to the suspension, a first fraction $S_{LD}$ of particles will swim or float in the upper part of the suspension, and a second fraction $S_{HD}$ of particles will sink or float in the lower part of the suspension. Non-polymer particles in the suspension, such as glass, metal, sand, and those polymer particles, which do not swell when in contact with the first liquid organic phase provided in step ii) are supposed to form the second fraction $S_{HD}$. Other particles like the swollen plastic composition swim or float in the upper part of the suspension, which is referred to as fraction $S_{HD}$.

In an optional step pre-vii), a sediment formed in the suspension is separated from the suspension and possibly floating particles, wherein the sediment comprises at least a part of the second fraction $S_{HD}$. This step can be either performed by removing at least a part of the second fraction $S_{HD}$, for example by using a sluice in the bottom part of a vessel, or by removing at least a part of the first fraction $S_{LD}$ from the top of the suspension, by decantation, skimming or so. Another way of separation could include a separator, positioned in an about horizontal manner, which divides the suspension into an upper and a lower part, wherein the upper part contains the fraction $S_{LD}$ comprising and the swollen material. In another variant of separation, separation can be achieved by centrifugation, whereby parts of the suspension having a lower density remain more central and parts of higher density are driven to the peripheral part of the centrifugation device. Examples of suited centrifugation devices are centrifuges, rotating tubes, cyclones, decanters.

This is an embodiment of the first aspect of the invention. It may be combined with any single other embodiment or plurality of embodiments of the first aspect of the invention.

In step vii), water is removed from the suspension to recover the swollen material. The swollen material comprises the plastic composition. Thereby, the plastic composition is obtained. In principle, any means or technique known to a skilled person can be employed which he knows and considers suited therefor. For example, the swollen material may be treated in a centrifuge, a decanter, a rotating decanter, a tumbler, a rotating tube, by air jet, cycloning, vacuum and the like. Moreover, a combination of two or more of the just mentioned techniques and devices may be used.

This is an embodiment of the first aspect of the invention. It may be combined with any single other embodiment or plurality of embodiments of the first aspect of the invention.

In a further embodiment of the first aspect of the invention, the process may further comprise these steps:

ix) providing a second liquid organic phase, wherein the second liquid organic phase comprises an organic solvent;
x) contacting the second liquid organic phase with the swollen material wherein the swollen material is dissolved and a base composition is formed;
xi) Dividing the base composition into a first composition and a second composition;

wherein the first composition has a higher content of additives than the second composition; and
wherein the second composition has a higher content of the vinyl halide polymer than the first composition.

In step ix) a second liquid organic phase may be provided, which comprises at least one organic solvent, as described above. The providing can be accomplished by any means and techniques known to and considered suited by a skilled person. For example, providing of the second liquid organic phase can be a pouring, purging, dispensing, dripping.

Providing may be accomplished by any means and techniques known to and considered suited in the present process by a skilled person. For example, providing may be placing both, the plastic composition and the liquid organic phase, in a vessel, like a beaker, a pot, a round bottom flask, a mixer and the like. In principle, both components, i.e. the plastic composition and the liquid organic phase can be placed at the same time or one after another, or the first at once, and the second component in multiple portions.

In step x) both, the swollen material and the second liquid organic phase are brought into contact and the swollen material is dissolved and a base composition is formed. This step can be enhanced by agitation.

Agitation can be used to speed up and/or assist the dissolution in step ii). Agitation may be made by all means and techniques known to and considered suited in the present process by a skilled person. For example, a mechanical stirrer can be used in order to stir the plastic composition and the liquid organic phase during step ii). Another way to accomplish agitation may be applying a stream of gas. For example, air could be bubbled from the bottom of a vessel used in step ii) and through the mix of liquid organic phase and plastic composition. Or a jet of air, or inert gas, or a mixture of inert gases could be pressed through a nozzle in the vessel's wall.

The base composition obtained from step step x) can be homogenous and purely liquid, or heterogenous, i.e. a liquid with some undissolved yet solid remainder. Ideally, all of the swollen material present has dissolved into the second liquid organic phase at this stage. In case of being heterogeneous, it might be advantageous to remove any undissolved reminder from the base composition to obtain a homogenous base composition. Removal of the undissolved remainder can be accomplished by any means and techniques known to and considered suited in the present process by a skilled person. For example, by passing the base composition through a filter or a sieve, a centrifuge, cyclone, etc. For example, a 100 $\mu$m sieve or filter could be used to retain all undissolved remainder of particle size larger than 100 $\mu$m. One might also remove the undissolved remainder by decantation provided that the undissolved remainder swims on the surface or sinks to the bottom of the base composition, i.e. the density of the undissolved remainder is less or larger than the density of the base composition.

In step xi), the base composition is then divided into a first composition and a second composition. The aim is to concentrate the vinyl halide polymer in one of the first or the second composition, and the further constituents in the other. For the purpose of the presentation of the invention, the composition which has the higher vinyl halide polymer content is described as the "second composition", and the composition having a lower content of vinyl halide polymer is the "first composition". The terms "lower" and "higher" in this context refer to the relative content of vinyl halide polymer when comparing the first and the second composition. For example, 60 wt.% of vinyl halide polymer in a sample is a higher content that 40 wt.% of vinyl halide polymer.

In a preferred variant of the invention, step x) and/or step xi) is performed at a temperature in the range from 20 °C to 150 °C, for example at a temperature in the range from 35 to 55°C, from 60 to 90 °C, or from 100 to 150 °C, or from 120 to 150 °C, or from 130 to 150 °C. The temperature depends on the constituents of the second liquid organic phase. The temperature may be chosen not to exceed the boiling point $bp_{min}$ of the constituent in the second liquid organic phase, which is lowest, amongst all the constituents composing the second liquid organic phase. It is preferred to choose the temperature for step x), and/or step xi) in the range from 60 to 90 %, or from 70 to 95%, the % in all cases relative to $bp_{min}$. For example, if the second liquid organic phase is composed of ethyl methyl ketone (MEK) being the constituent of the liquid organic phase having the lowest boiling point, then $bp_{min}$ is the boiling point of MEK, which is 79,6 °C. Then, at least one of steps xii) or xiii), or even both steps is preferably performed at a temperature in the range from $0,6*bp_{min}$ to $0,9*bp_{min}$, which is in the range from 47,8 and 71,6 °C.

Another, preferred variant of the invention is to perform at least one of step x), step xi) or both at a temperature above the boiling point of the second liquid organic phase, and in case of a solvent mixture above the boiling point $bp_{min}$ of the constituent to the second liquid organic phase which has the lowest boiling point amongst all constituents composing the liquid phase. For example, the temperature in step x), and/or step xi) could be up to 50 °C higher than the boiling point, or up to 40, 30, 20, or 10 to 50, 15 to 50, 20 to 50, or 20 to 45, 20 to 40 °C higher than the boiling point.

In that event, on of step x), step xi) or both may be operated under pressure. For example, between 1 and 50 bars above ambient pressure, or 1 to 40, 1 to 35, 1 to 30, 1 to 25, 1 to 20, or 5 to 40, 5 to 35, 5 to 30, 5 to 25, or 10 to 40, 10 to 35, or 15 to 40, 15 to 35, or 20 to 50, 20 to 45, 20 to 40 bars above ambient pressure.

In an embodiment of the process of the invention, the dividing in step xi) is performed using a technique selected from one of these: filtration, membrane filtration, deep filtration, centrifugation, decantation, rotating decanter, flotation, cycloning.

In an embodiment of the process of the invention, at least one of these features applies during dividing in step xi):

a)) the first composition has a density of less than 1.0 g/cm$^3$, for example less than 0.96, 0.92, 0.88, 0.82 or less than 0.80 g/cm$^3$.

b)) The second composition has a density of 1.0 g/cm$^3$ or more, for example 1.1 g/cm$^3$ or more, 1.2, 1.3, 1.4, 1.5, or 1.6 g/cm$^3$ or more;

c)) wherein the step has a throughput of at least 0.5 L/m$^2$/h/bar;

d)) the temperature of the base composition during the dividing is in the range from 10 to 150 °C, e.g. 20 to 90 °C, or 20 to 80 °C, or 20 to 50 °C;

e)) the pressure of the base composition during the dividing is in the range from 1 to 20 bar;

Or a combination of any two or more of the above.

Further, the process of the present invention may have a throughput in step xi) of at least 0.5 L/m$^2$/h/bar, for example in a range from 0.5 to 100 L/m$^2$/h/bar, or from 0.5 to 70 L/m$^2$/h/bar, or from 0.5 to 50 L/m$^2$/h/bar, or from 1 to 70 L/m$^2$/h/bar, or from 1 to 50 L/m$^2$/h/bar, or from 1 to 40 L/m$^2$/h/bar, or from 1 to 30 L/m$^2$/h/bar, or from 1 to 25 L/m$^2$/h/bar, or from 1 to 20 L/m$^2$/h/bar, or from 1 to 15 L/m$^2$/h/bar, or from 1 to 10 L/m$^2$/h/bar, or from 1 to 7 L/m$^2$/h/bar, or from 1 to 5 L/m$^2$/h/bar, or from 1 to 3 L/m$^2$/h/bar. The throughput describes the quantity of the base composition in step xi) per unit of time and membrane area. The throughput is measured in volume per square meters per hour per bar.

Moreover, or a combination of any two or more of the above features can apply. Preferred embodiments of with combinations of the above features are: a)), b)), a))+b)), c)), a))+c)), b))+c)), a))+b))+c)), d)), a))+d)), b))+d)), a))+b))+d)), c))+d)), a))+c))+d)), d))+e)), a))+d))+e)), b))+d))+e)), b))+e)), c))+d))+e)), a))+c))+d))+e)), b))+c))+d))+e)), a))+b))+c))+d))+e)).

The process of the invention may comprise a further step:

xii) Splitting the second composition into a solid phase comprising the vinyl halide polymer and a recovered organic phase. Ideally, the vinyl halide polymer has lower content of organic phase than the recovered organic phase.

This is an embodiment of the first aspect of the invention. It may be combined with any single other embodiment or plurality of embodiments of the first aspect of the invention.

The splitting in step xii) can be achieved by a single splitting step, or by a sequence of multiple splitting steps. That is, when another splitting follows to a first splitting, and so on. In this event, it is preferred to combine all portions of vinyl halide polymer obtained in these splitting steps on the one side, and all organic phase portions to a combined recovered organic phase. The splitting in step xii) might be considered complete when about no, that is a maximum of 5 wt.%, for example 1 wt.% or less of second liquid organic phase remains with the vinyl halide polymer any more.

The splitting of step xii) can be made by any means and techniques known to and considered useful by a skilled person to be employed in the present process. For example, the liquid organic phase and the vinyl halide polymer may be separated by freeze drying or distillation of the organic phase. Other examples for splitting techniques are precipitation, centrifugation, removal of organic phase in vacuo, flash drying, fluid bed drying, and stripping (steam extraction).

This is an embodiment of the first aspect of the invention. It may be combined with any single other embodiment or plurality of embodiments of the first aspect of the invention.

The process of the invention may comprise a further step:
xiii) Splitting the first composition into a solid or liquid phase comprising the additives, and a recovered organic phase via nanofiltration.

The splitting in step xiii) can be achieved by a single splitting step, or by a sequence of multiple splitting steps. That is, when another splitting follows to a first splitting, and so on. In this event, it is preferred to combine all portions of additives containing phase obtained in these splitting steps on the one side, and all organic phase portions to a combined recovered organic phase.

The splitting of step xiii) can be made by any means and techniques known to and considered useful by a skilled person to be employed in the present process. For example, the organic phase and the additives may be separated by freeze drying or distillation of the organic phase. For example, a membrane separation could be employed to split the first composition into additives and recovered organic solvent. A suited membrane for this purpose may be one of those having an MWCO of 1000 Da or less, for example one of those described in the Journal of Membrane Science, 602, p. 117972.

This is an embodiment of the first aspect of the invention. It may be combined with any single other embodiment or plurality of embodiments of the first aspect of the invention.

In a further embodiment of the process of the invention, the process is designed and/or operated as a continuous process. In this case, the plastic composition and the first liquid organic phase in step i) are provided in form of feed streams. These two feed streams are combined in step iii) to swell the plastic composition in step iv) at least partially in the liquid organic phase, whereby a stream of swollen material is obtained. In a step v), a stream of a first aqueous phase is combined with the stream of swollen material and then contacted in step vi). Next, at least some water is removed from the stream in step vii) whereby a stream of recovered swollen material is obtained, which comprises the vinyl halide polymer.

In an embodiment of this, the stream of recovered swollen material is subjected to a further step viii) to remove at least some of the first liquid organic phase from the swollen material.

This is an embodiment of the first aspect of the invention. It may be combined with any single other embodiment or plurality of embodiments of the first aspect of the invention.

In a further embodiment of the process of the invention, at least one of these features applies for the at least partial removal of at least one organic solvent in step viii):

(A) The organic solvent is removed at a temperature in the range from 10 to 150 °C and at a pressure of 1 bar; for example 10 to 90 °C, or 20 to 90 °C, 30 to 90 °C, 40 to 90 °C, 50 to 90 °C, 60 to 90 °C 70 to 90 °C, or 80 ° 90 °C, or from 100 to 150 °C, 120 to 150 °C, 130 to 150 °C, or from 110 to 140 °C, the temperatures always at 1 bar; for example 20 to 80 °C; 30 to 80 °C, 50 to 80 °C, 60 to 80 °C or 70 to 80 °C, always at 1 bar; or from 20 to 70, 30 to 70, 40 to 70, 50 to 70 or from 60 to 70 °C, always at 1 bar;

(B) The organic solvent is removed at a pressure in the range from 0.05 bar to 1 bar and a temperature in the range from 10 to 90 °C; depending on the boiling point of an organic solvent at 1 bar, which is known, a skilled person can compute the boiling temperature at a reduced pressure.

(C) Removing is performed by using a rotary kiln, fluid bed, or flash drier.

(D) The content of organic solvents in the recovered material after completion of step viii) is less than 1.0 wt.%, for example less than 0.8, 0.6, 0.4 or less than 0.2 wt.%, based on the total weight of the recovered material;

Or a combination of any two or more of the above.

Moreover, or a combination of any two or more of the above features can apply. Preferred embodiments of with combinations of the above features are: (A), (B), (A)+(B), (C), (A)+(C), (B)+(C), (A)+(B)+(C), (D), (A)+(D), (B)+(D), (A)+(B)+(D), (C)+(D), (A)+(C)+(D), (B)+(C)+(D), (A)+(B)+(C)+(D).

This is an embodiment of the first aspect of the invention. It may be combined with any single other embodiment or plurality of embodiments of the first aspect of the invention.

In a further embodiment of this, a feed of a second liquid organic phase is provided in step ix), and the swollen material is contacted in step x) with the second liquid organic phase, whereby a single stream of a base composition is formed, also referred to as base stream. That base stream is divided in step xi) into a first sub-stream comprising a first composition and a second sub-stream comprising a second composition, wherein the second sub-stream has a higher content of the vinyl halide polymer than the first sub-stream. This dividing can be repeated with the second sub-stream, wherein a resulting sub$^2$-stream has an even higher content of the vinyl halide polymer etc. Subsequently, the resulting second sub-stream comprising the vinyl halide polymer can be subjected to a splitting step xii), in which a solid phase comprising the vinyl halide polymer and a recovered organic phase are obtained, wherein the vinyl halide polymer has a lower content of additives that the initial plastic composition. Similarly, the first composition can be further split into a phase (solid or liquid) comprising the additives and a recovered organic phase. Further description regarding the dividing and the splitting steps, and the compositions obtained thereby can be transferred in analogy to the streams and products obtained in the continuous process. Similarly, the same membranes as described before can be used.

This is an embodiment of the first aspect of the invention. It may be combined with any single other embodiment or plurality of embodiments of the first aspect of the invention.

In an embodiment of the invention the recovered organic phase is at least partially reused after performing the process by providing the recovered organic phase again as liquid organic phase in step ii), or in optional step ix). This applies to both continuous and batch operation. For example, the liquid organic phase in step ii) and/or step ix) comprises an amount of at least 90, or 95 Vol.% of recovered organic phase. Ideally, the liquid organic phase in step ii), or step ix), or both is composed about fully, or 99 to 100 Vol% by recovered organic phase. This is also referred to as a "closed loop process". The Vol% in this context referring to the total amount of liquid organic phase present in step i).

This is an embodiment of the first aspect of the invention. It may be combined with any single other embodiment or plurality of embodiments of the first aspect of the invention.

Preferably, the vinyl halide polymer made by the process of the invention is obtained in solid state. However, sometimes, this vinyl halide polymer may comprise up to 10 wt.% of one or more organic solvents in total. For example, the resulting vinyl halide polymer may comprise from 2 to 5 wt.% of organic solvents. The amount of organic solvents is based with respect to the total amount of vinyl halide polymer.

This is an embodiment of the first aspect of the invention. It may be combined with any single other embodiment or plurality of embodiments of the first aspect of the invention.

Preferably, the vinyl halide polymer made by the process according to the invention comprises less than 10'000 ppm of additives. For example, in the range from 1'000 to 5'000 wt.% additives. Or less than 1'000 ppm of additives, for example 100 to 800 ppm, or 100 to 500 ppm, or 500 ppm or less, or 200 ppm or less, or even 100 ppm or less. Often some ppm of additives, for example 5 - 50 ppm, or 10 - 30 ppm remain in the vinyl halide polymer. The amount of additives always with respect to the total amount of vinyl halide polymer.

This is an embodiment of the first aspect of the invention. It may be combined with any single other embodiment or plurality of embodiments of the first aspect of the invention.

Preferably, in the process of the invention, the first, or the second, or both liquid organic phase(s)comprise less than 40 wt.% of water, based on the total amount of liquid organic phase, for example 30 wt.% or less, or 20 wt.% or less, or 10 wt.% or less water. Often at least a bit of water, e.g. 0.1 wt.% are present in the first, the second or both liquid organic phases. The amount of water in a liquid organic phase can be determined by Karl-Fischer-Titration.

This is an embodiment of the first aspect of the invention. It may be combined with any single other embodiment or plurality of embodiments of the first aspect of the invention.

The vinyl halide polymer made by the process according to the invention may have at least 10 times less, for example at least 20 times less, at least 50 times less, at least 100 times less, for example from 10 to 1'000 -times, or from 10 to 100-times, or from 20 to 100-times less additives, per additive substance, than the plastic composition. The amount of additives in the vinyl halide polymer is based on the amount of vinyl halide polymer. The amount of additives in the plastic composition is given with respect to the amount of vinyl halide polymer therein.

This is an embodiment of the first aspect of the invention. It may be combined with any single other embodiment or plurality of embodiments of the first aspect of the invention.

The vinyl halide polymer made by the process of the invention may have a content of less than 0.1 wt.%, for example less than 0.08, 0.06, 0.05, 0.04, 0.03, 0.02 or less than 0.01 wt.% of constituents other than vinyl halide polymer, so-called additives, the wt.% with respect to the total amount of vinyl halide polymer and other constituents. Often a content of 99.9 wt.% vinyl halide polymer is not exceeded.

This is an embodiment of the first aspect of the invention. It may be combined with any single other embodiment or plurality of embodiments of the first aspect of the invention.

The vinyl halide polymer made by the process of the invention may have a content of less than 0.1 wt.%, for example less than 0.08, 0.06, 0.05, 0.04, 0.03, 0.02 or less than 0.01 wt.% of non-polymeric constituents, the wt.% with respect to the total amount of vinyl halide polymer and non-polymeric constituents. Often a content of 99.9 wt.% vinyl halide polymer is not exceeded.

This is an embodiment of the first aspect of the invention. It may be combined with any single other embodiment or plurality of embodiments of the first aspect of the invention.

The vinyl halide polymer made by the process of the invention may have a content of more than 99 wt.%, for example more than 99.2, 99.4, 99.5, 99.6, 99.7, 99.8 or even more than 99.9 wt.% of non-polymeric constituents, the wt.% with respect to the total amount of vinyl halide polymer and non-polymeric constituents. Often a content of 99.9 wt.% vinyl halide polymer is not exceeded.

This is an embodiment of the first aspect of the invention. It may be combined with any single other embodiment or plurality of embodiments of the first aspect of the invention.

Preferably, the vinyl halide polymer made by the process of the invention may have at least 10 times less, for example at least 20 times less, at least 50 times less, at least 100 times less, for example from 10 to 1'000 -times, or from 10 to 100-times, or from 20 to 100-times lead than the plastic composition. The amount of lead in the vinyl halide polymer is based on the amount of vinyl halide polymer. The amount of lead in the plastic composition is given with respect to the amount of vinyl halide polymer therein. Lead content can be determined by ICP-OES, see test method's section.

Sources of lead in the vinyl halide polymer and/or the plastic composition can be for example tribasic lead sulfate, dibasic lead phosphite, dibasic lead stearate, normal lead stearate, dibasic lead phthalate, and the like, as well as combinations of two or more thereof.

Preferably, the vinyl halide polymer made by the process of the invention may have a content of less than 0.1 wt.%, for example less than 0.08, 0.06, 0.05, 0.04, 0.03, 0.02 or less than 0.01 wt.% of lead, the wt.% with respect to the total amount of vinyl halide polymer. Often a content of 99.9 wt.% vinyl halide polymer is not exceeded. The remainder to 100 wt.% is - besides of lead - further constituents, such as additives. Lead content can be determined by ICP-OES, see test method's section.

This is an embodiment of the first aspect of the invention. It may be combined with any single other embodiment or plurality of embodiments of the first aspect of the invention.

Preferably, the vinyl halide polymer made by the process of the invention may have at least 10 times less, for example at least 20 times less, at least 50 times less, at least 100 times less, for example from 10 to 1'000 -times, or from 10 to 100-times, or from 20 to 100-times less di(2-ethylhexyl) phthalate (DEHP) than the plastic composition. The amount of DEHP in the vinyl halide polymer is based on the amount of vinyl halide polymer. The amount of DEHP in the plastic composition is given with respect to the amount of vinyl halide polymer therein. The amount of DEHP is determined by using HPLC with a mass spectrometer coupled thereto.

This is an embodiment of the first aspect of the invention. It may be combined with any single other embodiment or plurality of embodiments of the first aspect of the invention.

Preferably, the vinyl halide polymer made by the process of the invention may have a content of less than 0.1 wt.%, for example less than 0.08, 0.06, 0.05, 0.04, 0.03, 0.02 or less than 0.01 wt.% of DEHP, the wt.% with respect to the total amount of vinyl halide polymer. Often a content of 99.9 wt.% vinyl halide polymer is not exceeded. The remainder to 100 wt.% is - besides of DEHP - further constituents, such as additives.

This is an embodiment of the first aspect of the invention. It may be combined with any single other embodiment or plurality of embodiments of the first aspect of the invention.

In an embodiment of the process of the invention, an optional step pre-v) can be included after the swelling and prior to the providing of an aqueous phase in step v). This step pre-v) is a removing non-dissolved matter.

This is an embodiment of the first aspect of the invention. It may be combined with any single other embodiment or plurality of embodiments of the first aspect of the invention.

In an embodiment of the process of the invention, an optional step pre-vii) can be applied to the suspension formed in step vi) and prior to the removing of water from the suspension in step vii). This step pre-vii) is a removing non-dissolved matter from the suspension.

This is an embodiment of the first aspect of the invention. It may be combined with any single other embodiment or plurality of embodiments of the first aspect of the invention.

In an embodiment of the process of the invention, an optional step pre-viii) can be applied prior to the removing at least a part of the organic phase. This step pre-viii) is a removing non-dissolved matter.

This is an embodiment of the first aspect of the invention. It may be combined with any single other embodiment or plurality of embodiments of the first aspect of the invention.

In an embodiment of the process of the invention, an optional step pre-xi) can be included and applied to the base composition prior to the dividing of the base composition in step xi). This step pre-xi) is a removing non-dissolved matter.

This is an embodiment of the first aspect of the invention. It may be combined with any single other embodiment or plurality of embodiments of the first aspect of the invention.

Removing of non-dissolved matter or solid matter can be performed by any means and techniques know to a skilled person and considered suited by him. An example of such techniques if passing an at least in part liquid phase through a filter, comprising a filter medium such as a sieve, filter, a deep filter. The filter can be composed of a single or two or more filter media. In a variant, the filter may have a screen size in the range from 50 to 500 μm, for example 50 to 300 μm or 50 to 200 μm, e.g. about 100 μm. The filter medium can be substantially made from or comprising paper, ceramic, metal mesh, or a combination of two or more thereof.

In an embodiment of the process of the invention, at least one of the steps i) - vii) is performed at a temperature in the range from 15 to 150 °C, or from 15 to 80 °C, for example 15 to 55 °C, or 15 to 30 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

Preferably, two or more, or all of the steps i) - vii) are performed at a temperature in the range from 15 to 150 °C, or from 15 to 80 °C, for example 15 to 55 °C, or 15 to 30 °C, or at a temperature of 20±10 °C, or 20±5 °C.

This is an embodiment of the first aspect of the invention. It may be combined with any single other embodiment or plurality of embodiments of the first aspect of the invention.

In an embodiment of the process of the invention, at least one of the steps ix) - xi) is performed at a temperature in the range from 15 to 150 °C, or from 15 to 80 °C, for example 15 to 55 °C, or 15 to 30 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

Preferably, two or more, or all of the steps ix) - xi) are performed at a temperature in the range from 15 to 150 °C, or from 15 to 80 °C, for example 15 to 55 °C, or 15 to 30 °C, or at a temperature of 20±10 °C, or 20±5 °C.

This is an embodiment of the first aspect of the invention. It may be combined with any single other embodiment or plurality of embodiments of the first aspect of the invention.

In an embodiment of the process of the invention, at least one of the pre-treatment steps a) - e) is performed at a temperature in the range from 15 to 150 °C, or from 15 to 80 °C, for example 15 to 55 °C, or 15 to 30 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

Preferably, two or more, or all of the pre-treatment steps a) - e) are performed at a temperature in the range from 15 to 150 °C, or from 15 to 80 °C, for example from 15 to 55 °C, or 15 to 30 °C, or at a temperature of 20±10 °C, or 20±5 °C.

This is an embodiment of the first aspect of the invention. It may be combined with any single other embodiment or plurality of embodiments of the first aspect of the invention.

In an embodiment of the process of the invention, all of the steps i)-vii) including a pre-treatment according to step a) - e) are performed at a temperature in the range from 15 to 150 °C, or from 15 to 80 °C, for example from 15 to 55 °C, or 15 to 30 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

In an embodiment of the process of the invention, all of the steps i)-viii) including a pre-treatment according to step a) - e) are performed at a temperature in the range from 15 to 150 °C, or from 15 to 80 °C, for example from 15 to 55 °C, or 15 to 30 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

In an embodiment of the process of the invention, all of the steps i)-xi) including a pre-treatment according to step a) - e) are performed at a temperature in the range from 15 to 150 °C, or from 15 to 80 °C, for example from 15 to 55 °C, or 15 to 30 °C. Preferably, at least one of these steps is performed at a temperature of 20±10 °C, or 20±5 °C.

This is an embodiment of the first aspect of the invention. It may be combined with any single other embodiment or plurality of embodiments of the first aspect of the invention.

A second aspect of the invention is a vinyl halide polymer obtainable by a process as described regarding the first aspect of the invention or one or more of the embodiments relating thereto. Features and description relating to the first aspect of the invention and its embodiments are also applicable to the second aspect.

In an embodiment to the second aspect, the vinyl halide polymer comprises less than 0.1 wt.%, for example less than 0.08, 0.06, 0.05, 0.04, 0.03, 0.02 or less than 0.01 wt.% of constituents other than vinyl halide polymer, so-called additives, the wt.% with respect to the total amount of vinyl halide polymer and other constituents. Often a content of 99.9 wt.% vinyl halide polymer is not exceeded.

A third aspect of the invention is an article comprising a vinyl halide polymer obtainable by the process according to the first aspect of the invention or any one of its embodiments. Features and description relating to the first aspect of the invention and its embodiments are also applicable to the third aspect.

The article can be of any kind known to and considered suited by a skilled person. For example, the article may be selected from the group consisting of a fiber, a filament, a textile, a film and a formed body, such as pipe, tube, door, shutter or profile, or an object of more complex geometrical shape.

A further aspect is a method of manufacture of an article comprising the steps of providing the vinyl halide polymer obtainable by the process according to the first aspect of the invention or any of its embodiments, and forming the vinyl halide polymer whereby the article obtained.

A fourth aspect of the invention is a use of the vinyl halide polymer in an article, wherein the vinyl halide polymer is obtained by the process according to the first aspect of the invention or any one of its embodiments. Features and description relating to the first aspect of the invention and its embodiments are also applicable to the fourth aspect.

A fifth aspect of the invention is a use of a vinyl halide polymer in an article, wherein the vinyl halide polymer is obtained by the process according to the first aspect of the invention or any one of its embodiments. Description regarding the first aspect and the process is also applicable to the fifth aspect.

A sixth aspect of the invention is a use of swelling of a vinyl halide polymer in at least one organic solvent for specific gravity separation of the swollen vinyl halide polymer from matter having a density of up to and including 2.0 g/cm$^3$. Description regarding the first aspect and the process is also applicable to the sixth aspect.

A seventh aspect of the invention is a use of swelling of a vinyl halide polymer in at least one organic solvent to improve the purity of the vinyl halide polymer. Description regarding the first aspect and the process is also applicable to the seventh aspect.

**Figures**

The invention is illustrated below by means of figures by way of example. The figures are not to scale and are not intended to limit the invention.

Fig. 1    is a schematic presentation of the process according to first aspect of the invention.
Fig. 2    is a schematic presentation of an embodiment of the first aspect of the invention including a step viii), i.e. with solvent removal
Fig. 3    is a schematic presentation of an embodiment of the process of the first aspect of the invention composed of further steps ix) to xi).
Fig. 4    is a schematic presentation of a pre-treatment prior to step i) of the process of the invention comprising steps a) to e).

**Description of the figures**

DESCRIPTION OF THE FIGURES

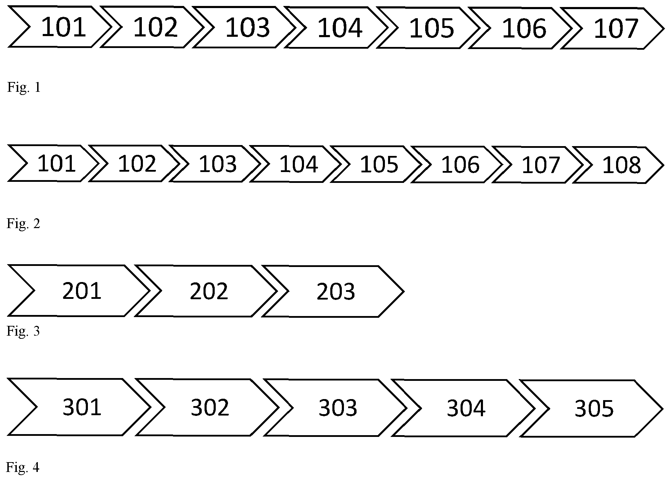

**Fig. 1** shows a schematic presentation of the process of the invention **100.** First, a milled scrap plastic composition incl. additives **101,** such as PVC waste from electrical wire insulation or construction materials like window frames, are provided in step i) and a first liquid organic phase **102** in step ii). In step iii) **103,** the first liquid organic phase and the plastic composition are contacted, wherein a swelling (step iv - **104)** of at least some part of the plastic composition occurs to give a swollen material. Then, a first aqueous phase is provided in step v) **105** and the swollen material is contacted in step vi) **106** with the first aqueous phase, wherein a suspension is obtained. In step vii) **107,** at least some water is removed from the suspension to recover the swollen material.

**Fig. 2** shows a process as in Fig. 1, including a further step viii) **108.** In this step viii) **108** at least some of the liquid organic phase is recovered from the swollen material.

**Fig. 3** shows a schematic presentation of the process of the invention **100** as shown in **Fig. 1** or **Fig. 2** (not shown here), but including three further steps **201** - **203.** In these steps, a second liquid organic phase is provided in step ix) **201** and brought in contact in step x) **202** with the swollen material obtained either from step vii) **107** or step viii) **108,** forming a base composition. In step xi) **203,** the base composition is divided into a first composition and a second composition, the first composition has a higher content of additives than the second composition, and wherein the second composition has a higher content of the vinyl halide polymer than the first composition.

**Fig. 4** shows a schematic presentation of the process of the invention **100** as shown in **Fig. 1** or **Fig. 2** (not shown here), but comprising a pre-treatment before process step i). The pre-treatment comprises at least these steps: Step a) **301** Providing a feed composition comprising a plastic composition wherein the plastic composition comprises at least 10 wt.% of the vinyl halide polymer and one or more additives; Step b) **302** Providing a second aqueous phase comprising water and at least one salt, wherein the salt is dissolved in the water at least partially, wherein the second aqueous phase has a density in the range from 0.9 and 1.4; Step c) **303** Contacting the second aqueous phase with the feed composition to form a slurry; Step d) **304** Separating a sediment formed in the slurry from the slurry and possibly floating particles, wherein the sediment comprises at least a part of the plastic composition; and step e) **305** Removing water from the plastic composition.

**Test methods**

a. Density

The density of samples of waste polymer, polymer articles and recycled polymer was determined according to DIN EN ISO 1183-1:2019, method A (immersion method). The samples were cut to a size of 10 mm x 4 mm x 30 mm. The balance employed was a Mettler Toledo XPR204 S in combination with density Kit XPR-S X SR-S. Deionized water was used as medium. All the experiments were performed twice.

The weight of the particle in air and the weight difference with the particle under water was determined and allows to calculate the density of the unswollen or swollen PVC article. A table showing the density of water at a given temperature is found in scientific textbooks and tables, e.g. the CRC Handbook of Chemistry and Physics, 95th edition (2014), section 6-7 and 6-8.

This density test is limited to samples which are dense and solid, i.e. have no closed pores. The test was used to determine the density of polymer samples, in particular PVC (waste or recycled).

b. Swelling test and swell rate Q

A sample as in a. above was put in a solvent, in which swelling is to be examined, at room temperature and the density of the sample was determined as in a. after 30 min., 1 hour, 2 hours and so forth.

The swell rate, Q, was determined using Eq. (2):

$$Q = \frac{\frac{m_1}{\rho_1} + \frac{m_2 - m_1}{\rho_2}}{\frac{m_1}{\rho_1}} \qquad (2)$$

where $m_1$ and $m_2$ are the weights of the sample before and after the swelling test, respectively, and $\rho_1$ and $\rho_2$ are the densities of the sample and the solvent, respectively. All the experiments were performed twice.

c. Molecular weight of vinyl halide polymer

The number averaged molecular weight of a sample of a vinyl halide polymer is determined using a calibrated GPC (gel permeation chromatography), running THF as mobile phase at a flux of 0.4 ml/min at 40 °C. The eluate signal was recorded using a refractive index analyzer. The technical equipment used was an EcoSEC Ambient Temperature System, equipped with one TSKgel SuperH4000 and a SUPERH3000 column with 6.0 mm Idx15 cm L, 3 $\mu$m particle size. Detector, pump oven and column oven were maintained at 40 °C.

d. Metal analysis

Metal analysis is performed by ICP-OES (Inductively coupled plasma - optical emission spectrometry). For the ICP-OES analysis, a melting procedure is performed using addition of H2SO4, LiBO2 and heating up the sample. After addition of water and HCl, the sample is analyzed by ICP-OES.

e. Plasticizer analysis

Plasticizer analysis was performed in double by a Soxhlet extraction using MTBE as solvent during at least 8h (2x1.5g PVC material; ±150ml methyl tert-butyl ether bp=55°C). The amount of extract (%) is determined gravimetrically. The extract is analyzed by NMR, HPLC-MS and GC-MS to identify and quantify the plasticizers.

f. Density of liquid samples

The density of a liquid can be determined using a pyknometer or a Mettler-Toledo FX-30330857 Densito handheld Density Meter. It is measured at 20 °C.

g. Weight of a polymer sample

The weight of a sample was determined using a Mettler Toledo XPR204S.

h. Water in organic phase

The amount of water in an organic phase is determined using Karl-Fisher-Titration using a Mettler Toledo Titrator Compact V10S.

i. Dipole moment

The dipole moments of solvents and other chemical compounds is found in textbooks and tables, e.g. The Handbook of Chemistry and Physics, 95th edition (2014), Section 9-51 to 9-59.
Where necessary, it was measured using a dipole meter (available from V-Tech Instruments, India).

j. Vicat temperature

Vicat B50 was performed according to EN-ISO 306:2013 using a CEAST 9000 from Instron, Norwood, MA, USA on single layered 3 mm thick test specimen of shape 10 mm x 10 mm. For each sample, 3 test specimen were tested and the average value is noted.

k. Charpy impact test

Charpy impact test was performed according to DIN EN ISO 179-1eA (type 1 specimen, edgewise-notch A) at 23 °C with temperature conditioned test specimen (80 mm length, 4 mm thick and 10 mm width) and notch 0.25/45° on 10 specimens.

1. Thermal Stability

The thermal stability was tested according to DIN 53381: 0.5 g of ground material (1.4-2 mm) are put in a test tube and a nitrogen flow of 7 liter/hour is lead over the sample and leads the released HCl due to PVC degradation to 60 ml of distilled water of which the conductivity is measured. Test is performed at 200 °C (time to reach 50 $\mu$S) using a Metrohm 895 Professional PVC Thermomat. Tests are performed twice.

m. X-ray fluorescence

Analysis of PVC content in samples (based on chlorine) was done using X-Ray fluorescence using an XRF Epsilon 4 of Malvern Panalytical, Malvern, United Kingdom. A cup of 28mm diameter is filled with ground (particle size < 2 mm) PVC waste or recyclate. The mass of the sample and the height was measured to calculate a density of the material. This data was entered into the software to obtain a semi-quantitative analysis of the metals present in the PVC waste or recyclate.

n. Analysis of liquids

Liquids were analyzed using a Brucker HPLC-MS Ultimate 3000 coupled to a MicroTOFQII-detector using 1 ml of liquid, which was dissolved in methanol/20 mM ammonium acetate prior to testing.
Fractions received from the HPLC were analyzed for chemical identity using a Bruker NMR Avance II 400 Mhz NMR. Sample preparation was a drop per fraction in 40 mg in $CDCl_3$.
Further analysis was made using a Bruker FTIR Tensor 27.

**Examples**

The invention is further illustrated by examples below. The invention is not limited to the examples.

Example 1

A big bag of a waste stream comprising plastic waste (windows, doors, sealings) from deconstruction of a family home in East Belgium was obtained from a building waste recycler. By visual inspection, approx. 50 to 70 % of the volume was plastic, rest wood, metal, concrete and so on. A sample of 20 kg of the waste from the big bag was sawed to pieces of max. 10 cm in size, and further ground to smaller pieces of 1 cm in size with a Pallmann mill. These smaller pieces were poured into an aq. solution of $MgCl_2$ with an $MgCl_2$ content of 30 wt.% (having a density of 1.276 g/l). Those pieces found swimming were collected for further use in other plastic recycling or thermal processes. Those pieces found sinking were collected for PVC recycling. An analysis of the materials revealed this:

| Fraction | Material | Amount (estimated) |
| --- | --- | --- |
| Swimming fraction | Many plastics like polyolefines, silicones and the like; foamed plastics; wood; paper; carton; plasticized PVC from seals. Polystyrene, PMMA | 40 wt.% of total 20 kg sample |
| Sinking fraction | Plastic parts from PVC, filled plastics, glass, mineral materials like concrete, crosslinked polymers, metals; ... fraction thereof being plastic materials | 60 wt.% of total 20 kg sample<br>80 wt.% of sinking fraction |
| | ... fraction of plastic material from parts comprising vinyl halide polymer, as determined by X Ray Fluorescence | 65 wt.% of sinking fraction |

The sinking fraction could be used in example 2.

Example 2

100 g pieces from the "sinking fraction" from example 1 were poured into a first beaker comprising 200 ml of acetone and stirred at 10 rpm for 30 minutes at 30°C. The liquid was filtered of and the filtrate was poured in a second beaker comprising 500 ml of an aqueous solution of 40 wt.% $CaCl_2$ (density = 1.396 $g/cm^3$ at roomt temperature). It was observed that a part of the pieces sank to the bottom of the beaker, and others remained swimming. The pieces found swimming were skimmed off and dried and solvent removal in a vacuum oven or jet of pressurized air. An analysis of the materials revealed this:

| Fraction | Material | Amount (estimated) |
| --- | --- | --- |
| Swimming fraction | parts of swollen PVC | 75 wt.% of total 100g sample |
| Sinking fraction | filled plastics, glass, mineral materials like concrete, crosslinked polymers; | 25. wt.% of total 100g sample |

The swimming fraction could be used in Example 3.
The swelling liquid remaining in the beaker was also analyzed using HPLC-MS, mass determination after solvent removal in vacuum oven, NMR and IR. With this result:

| Compound | Amount weight percent | Remark |
| --- | --- | --- |
| water | 20% | |
| Acetone | 75% | |
| PVC, dissolved | 3% | Very fine PVC particles dissolve |
| Plasticizer DINP* | 1% | From PVC seals in windows |
| Polyacrylate and polymethylmethacrylate | 1% | Small part of processing aid and impact modifier shell |
| *Diisononylphthalate. | | |

Example 3

87 g of the pieces from the "swimming fraction" from example 2 were dried *in vacuo* at 40 °C for 12 hours. The yield was 75 g. It was observed that the pieces decreased in volume.

Example 4

6 g of the pieces from the "swimming fraction" from example 2 combined with 150 ml of THF in a beaker and stirred for 2 hours minutes at 66 °C. A clear and homogenous solution was obtained. This solution was combined under vigorous stirring with 300 ml of cold water, whereby a white residue was formed on the bottom of the beaker. The liquid mixture was filtered of and the white filtrate was dried in *in vacuo* at 40 °C for 24 hours. A powder of so-called rPVC was obtained in a yield of 4.92 g. An analysis of the powder by LC-MS, NMR and FTIR revealed this:

| Compound | Amount |
| --- | --- |
| rPVC | 4.8 g |
| polyacrylates | 0.10 g |
| Plasticizer DINP | 0.02 g |

Further, a dried sample of the rPVC powder after example 3 was processed into a milled sheet during 5 minutes at 190°C without addition of fresh additives followed by pressing at 195°C into pressed plates of 4 mm thickness for mechanical testing and testing degradation.

For comparison, a milled sheet and a pressed plate was produced from a sample of virgin PVC as used in construction for window frames: 100 parts suspension PVC resin of K-value 67, 4 parts of CaZn one pack (IKA 8344C6, available from IKA GmbH & Co. KG, Bitterfeld, Germany), 4 parts of white pigment $TiO_2$ (Kronos CL2220, available from Kronos International, Inc., Leverkusen, Germany), 4 parts of acrylate impact modifier (Paraloid KM366/REAL, available from the Dow Chemical Company, USA) and 10 part of filler $CaCO_3$ (Hydrocarb 95T, available from Omya International AG, Oftringen, Switzerland). The test revealed this:

| Test / property | Sample rPVC-dried swollen PVC example 3 | Profile dry blend with Sample virgin PVC + heat stabilizer/lubricant |
| --- | --- | --- |
| Vicat B50 (°C)- ISO 306 | 80.2 | 82.5 |
| Charpy at 23°C ($kJ/m^2$) | 15.1 | 16.7 |
| Dehydrochlorination test - time to reach 50$\mu$S (min) | 35 | 39 |

As shown in this comparison, the rPVC obtained in the example had very similar properties like the virgin PVC used in construction.

**Reference Numerals**

101    step i)

102    step ii)

103    step iii)

104    step iv)

105    step v)

106    step vi)

107    step vii)

108    step viii)

201    step ix)

202    step x)

203    step xi)

301    step a)

302    step b)

303    step c)

304    step d)

305    step e)

**Claims**

1.  A process of making a vinyl halide polymer comprising at least these steps:

    i) Providing a plastic composition, wherein the plastic composition comprises at least 10 wt.% of the vinyl halide polymer and one or more additives;
    ii) Providing a first liquid organic phase;
    Wherein the first liquid organic phase comprises at least one organic solvent;
    iii) Contacting at least a part of the plastic composition and a part of the first liquid organic phase;
    iv) Swelling at least a part of the plastic composition wherein a swollen material is formed;
    v) Providing a first aqueous phase comprising water and optionally at least one salt, wherein the salt is dissolved in the water at least partially,
    wherein the first aqueous phase has a density in the range from 0.9 and 2.0;
    vi) Contacting the swollen material and the first aqueous phase wherein a suspension is obtained;
    vii) Removing at least some water from the suspension to recover the swollen material.

2.  The process of claim 1, further comprising these steps:

    ix) providing a second liquid organic phase, wherein the second liquid organic phase comprises at least one organic solvent;
    x) contacting the second liquid organic phase with the swollen material wherein a base composition is formed;
    xi) Dividing the base composition into a first composition and a second composition;
    wherein the first composition has a higher content of additives than the second composition; and wherein the second composition has a higher content of the vinyl halide polymer than the first composition.

3.  The process of any of the preceding claims, wherein the swollen material formed in step iv) is swollen in its volume by a swell rate of at least 12.

4.  The process of any of the preceding claims, wherein at least one of the steps i) - vii) is performed at a temperature in the range from 15 to 150 °C.

5.  The process of any of the preceding claims, wherein at least one of the organic solvents being part or forming the first liquid organic phase and/or the second liquid organic phase has a dipole moment of 1.6 or more.

6.  The process of claim 1, wherein the providing of plastic composition of step i) comprises grinding the plastic composition into particles, wherein at least 75 % of the PVC particles have a size of 5 cm or less, based on the total number of the particles.

7. The process of claim 2, wherein the grinding is made by at least one of the techniques selected from universal milling, roller milling, single shaft shredder, pulverizer and crusher machine.

8. The process of any one of the preceding claims, wherein step i) comprises a pre-treatment comprising at least these steps:

   a) Providing a feed composition comprising a plastic composition wherein the plastic composition comprises at least 10 wt.% of the vinyl halide polymer and one or more additives;
   b) Providing a second aqueous phase comprising water and at least one salt;

   wherein the salt is dissolved in the water at least partially;
   wherein the second aqueous phase has a density in the range from 0.9 and 1.4;

   c) Contacting the second aqueous phase with the feed composition to form a slurry;
   d) Separating a sediment formed in the slurry from the slurry and possibly floating particles,
   wherein the sediment comprises at least a part of the plastic composition;
   e) Removing water from the plastic composition.

9. The process of any one of the preceding claims, wherein the at least organic solvent of the first liquid organic phase is selected from the group consisting of ketones, ethers, aromatics, DMA, DMF, DES and NADES.

10. The process of any one of the preceding claims, wherein the swelling is **characterized by** at least one of these features:

    (a) a temperature of both, the plastic composition and the first liquid organic phase, in the range from 10 °C to 50 °C;
    (b) a swell time in the range from 0.2 to 6 hours;
    (c) a density of the swollen plastic composition in the range from 1.0 to 1.4 $g/cm^3$;
    (d) a swell rate of the plastic composition of at least 1.2;
    or a combination of any two or more of the above.

11. A vinyl halide polymer obtainable by a process according to any of the preceding claims.

12. An article comprising a vinyl halide polymer as in claim 11, or obtainable by the process according to any one of claims 1 to 10.

13. The article according to claim 12, wherein the article is selected from the group consisting of fiber, a filament, a textile, a film and a formed body, such as pipe, tube, door, shutter or profile, or an object of more complex geometrical shape.

14. A use of vinyl halide polymer in an article, wherein the vinyl halide polymer is obtained by the process according to any one of claims 1 to 10, or according to any one of claims 11 to 13.

15. A use of swelling of a vinyl halide polymer in at least one organic solvent for specific gravity separation of the swollen vinyl halide polymer from matter having a density of up to and including 2.0 $g/cm^3$.

16. A use of swelling of a vinyl halide polymer in at least one organic solvent to improve the purity of the vinyl halide polymer.

101 〉 102 〉 103 〉 104 〉 105 〉 106 〉 107

Fig. 1

101 〉 102 〉 103 〉 104 〉 105 〉 106 〉 107 〉 108

Fig. 2

201 〉 202 〉 203

Fig. 3

301 〉 302 〉 303 〉 304 〉 305

Fig. 4

Europäisches
Patentamt

European
Patent Office

Office européen
des brevets

# EUROPEAN SEARCH REPORT

Application Number

EP 23 16 8303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUMAR HARENDRA ET AL: "Highly efficient recovery of high-purity Cu, PVC, and phthalate plasticizer from waste wire harnesses through PVC swelling and rod milling", REACTION CHEMISTRY & ENGINEERING, vol. 5, no. 9, 25 August 2020 (2020-08-25), pages 1805-1813, XP093086380, ISSN: 2058-9883, DOI: 10.1039/D0RE00303D * the whole document * | 1-16 | INV. B29B17/02 C08J11/08 ADD. B29B17/04 B29K27/00 B29K27/06 B29K105/00 |
| T | KUMAR HARENDRA ET AL: "Highly efficient recovery of high-purity Cu, PVC, and phthalate plasticizer from waste wire harnesses through PVC swelling and rod milling - Electronic Supporting Information", REACTION CHEMISTRY & ENGINEERING, [Online] vol. 5, no. 9, 25 August 2020 (2020-08-25), pages 1-11, XP093086383, DOI: 10.1039/D0RE00303D Retrieved from the Internet: URL:https://www.rsc.org/suppdata/d0/re/d0r e00303d/d0re00303d1.pdf> [retrieved on 2023-09-27] * the whole document * | | |
| X | US 6 548 561 B1 (MUELLER PETER [DE] ET AL) 15 April 2003 (2003-04-15) * claims; figures; examples * | 1-16 | |
| X | WO 2007/066533 A1 (ORIENT INSTR COMP CO LTD [JP]; MASUNARI MITSUO [JP] ET AL.) 14 June 2007 (2007-06-14) * paragraph [0090] - paragraph [0116] * * claims * | 11-14 | |

TECHNICAL FIELDS SEARCHED (IPC)

B29B
C09J
B29K
C08J

-/--

The present search report has been drawn up for all claims

| Place of search | Date of completion of the search | Examiner |
|---|---|---|
| Munich | 2 October 2023 | Dossin, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

EP 4 450 246 A1
Patentamt

European
Patent Office

Office européen
des brevets

# EUROPEAN SEARCH REPORT

Application Number

EP 23 16 8303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H11 12386 A (YAZAKI CORP) 19 January 1999 (1999-01-19) * paragraphs [0009], [0017] * * claims; examples * ----- | 11-14 | |
| X | EP 1 817 366 B1 (SOLVAY [BE]) 2 April 2008 (2008-04-02) * paragraphs [0004], [0014], [0034] – [0042]; claims * ----- | 11-14 | |

TECHNICAL FIELDS
SEARCHED        (IPC)

The present search report has been drawn up for all claims

| Place of search | Date of completion of the search | Examiner |
|---|---|---|
| Munich | 2 October 2023 | Dossin, Maxime |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

EP 4 450 246 A1

## ANNEX TO THE EUROPEAN SEARCH REPORT
## ON EUROPEAN PATENT APPLICATION NO.

EP 23 16 8303

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2023

| Patent document cited in search report | | Publication date | Patent family member(s) | | Publication date |
|---|---|---|---|---|---|
| US 6548561 | B1 | 15-04-2003 | AT | E217244 T1 | 15-05-2002 |
| | | | CA | 2341230 A1 | 02-03-2000 |
| | | | DE | 19838141 A1 | 24-02-2000 |
| | | | DK | 1105271 T3 | 26-08-2002 |
| | | | EP | 1105271 A1 | 13-06-2001 |
| | | | ES | 2174635 T3 | 01-11-2002 |
| | | | JP | 2002523254 A | 30-07-2002 |
| | | | NO | 318087 B1 | 31-01-2005 |
| | | | PT | 1105271 E | 31-10-2002 |
| | | | US | 6548561 B1 | 15-04-2003 |
| | | | WO | 0010787 A1 | 02-03-2000 |
| WO 2007066533 | A1 | 14-06-2007 | JP | 2009046520 A | 05-03-2009 |
| | | | WO | 2007066533 A1 | 14-06-2007 |
| JP H1112386 | A | 19-01-1999 | NONE | | |
| EP 1817366 | B1 | 02-04-2008 | AT | 391146 T | 15-04-2008 |
| | | | CN | 101061165 A | 24-10-2007 |
| | | | DE | 602005005852 T2 | 14-05-2009 |
| | | | EP | 1817366 A1 | 15-08-2007 |
| | | | ES | 2303281 T3 | 01-08-2008 |
| | | | FR | 2878250 A1 | 26-05-2006 |
| | | | JP | 2008520791 A | 19-06-2008 |
| | | | PL | 1817366 T3 | 30-09-2008 |
| | | | US | 2009203868 A1 | 13-08-2009 |
| | | | WO | 2006053907 A1 | 26-05-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C.M. HANSEN.** Hansen Solubility Parameters - A user's handbook. CRC Press, 2000
- CRC Handbook of Chemistry and Physics. 2014
- *Journal of Membrane Science,* vol. 602, 117972
- The Handbook of Chemistry and Physics. 2014